(19) Europäisches Patentamt / European Patent Office / Office européen des brevets

(11) **EP 4 334 582 B1**

(12) **FASCICULE DE BREVET EUROPEEN**

(45) Date de publication et mention
de la délivrance du brevet:
**15.01.2025 Bulletin 2025/03**

(21) Numéro de dépôt: **22724819.2**

(22) Date de dépôt: **04.05.2022**

(51) Classification Internationale des Brevets (IPC):
**F02C 3/113** $^{(2006.01)}$ **F02C 9/48** $^{(2006.01)}$
**F02C 9/56** $^{(2006.01)}$

(52) Classification Coopérative des Brevets (CPC):
**F02C 9/48; F02C 3/113; F02C 9/56;** F05D 2220/76;
F05D 2270/05

(86) Numéro de dépôt international:
**PCT/FR2022/050861**

(87) Numéro de publication internationale:
**WO 2022/234232 (10.11.2022 Gazette 2022/45)**

(54) **PROCÉDÉ DE CONTRÔLE D'UNE TURBOMACHINE COMPORTANT AU MOINS UNE MACHINE ÉLECTRIQUE, SYSTÈME DE CONTRÔLE ASSOCIÉ**

VERFAHREN ZUR STEUERUNG EINER TURBOMASCHINE MIT MINDESTENS EINER ELEKTRISCHEN MASCHINE UND ZUGEHÖRIGES STEUERUNGSSYSTEM

METHOD FOR CONTROLLING A TURBOMACHINE COMPRISING AT LEAST ONE ELECTRIC MACHINE, AND ASSOCIATED CONTROL SYSTEM

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **06.05.2021 FR 2104799**

(43) Date de publication de la demande:
**13.03.2024 Bulletin 2024/11**

(73) Titulaire: **SAFRAN**
**75015 Paris (FR)**

(72) Inventeur: **KAI, Jean-Marie**
**77550 MOISSY-CRAMAYEL (FR)**

(74) Mandataire: **Cabinet Beau de Loménie**
**158, rue de l'Université**
**75340 Paris Cedex 07 (FR)**

(56) Documents cités:
**EP-A1- 3 412 575     FR-A1- 3 087 491**
**US-A1- 2020 173 300**

**Description**

Technique antérieure

La présente invention appartient au domaine général du contrôle du fonctionnement de turbomachines. Elle concerne plus particulièrement un procédé de contrôle d'une turbomachine équipée d'une turbine à gaz et comportant également au moins une machine électrique formant un dispositif d'injection/prélèvement de puissance sur un arbre de rotation (basse pression ou haute pression) dudit générateur de gaz. Elle concerne également un système de contrôle configuré pour mettre en oeuvre ledit procédé de contrôle. En outre, l'invention trouve une application particulièrement avantageuse, bien que nullement limitative, dans le domaine de l'aéronautique, plus particulièrement dans le contexte du contrôle d'une turbomachine équipant un aéronef.

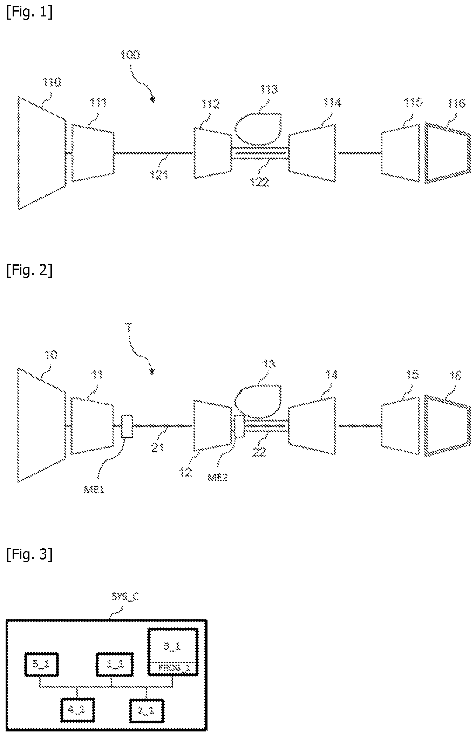

En référence à la figure 1, il est représenté de manière schématique une turbomachine 100 comportant un générateur de gaz. Plus particulièrement, l'exemple de la figure 1 illustre une turbomachine 100 du type turboréacteur à double flux et double corps pour aéronef.

De manière connue, la turbomachine 100 comprend, d'amont en aval dans le sens de l'écoulement des gaz, une soufflante 110, un compresseur basse pression 111, un compresseur haute pression 112, une chambre de combustion 113 qui reçoit une commande de débit de carburant Wf, une turbine haute pression 114, une turbine basse pression 115 et une tuyère primaire d'échappement 116. Le compresseur basse pression (ou BP) 111 et la turbine basse pression 115 sont reliés par un arbre basse pression 121 et forment ensemble un corps basse pression. Le compresseur haute pression (ou HP) 112 et la turbine haute pression 114 sont reliés par un arbre haute pression 122 et forment ensemble, avec la chambre de combustion, un corps haute pression. La soufflante 110, qui est entraînée par l'arbre BP 121, comprime l'air ingéré. Cet air se divise en aval de la soufflante 110 entre un flux d'air secondaire qui est dirigé directement vers une tuyère secondaire (non représentée) par laquelle il est éjecté pour participer à la poussée fournie par la turbomachine 100, et un flux dit primaire qui pénètre dans le générateur de gaz, constitué par le corps basse pression et le corps haute pression, puis qui est éjecté dans la tuyère primaire 116.

Conventionnellement, la commande de débit de carburant Wf est déterminée en fonction d'une différence entre le régime courant de la turbomachine et une consigne qui dépend d'une position d'une manette de commande manipulable par le pilote. A cet effet, une boucle de régulation de carburant est mise en oeuvre par un dispositif de contrôle, généralement intégré dans le calculateur du dispositif de régulation pleine autorité, encore dit « FADEC » (acronyme de l'expression anglo-saxonne « Full Authority Digital Engine Control »), équipant la turbomachine.

La boucle de régulation de carburant est donc mise en oeuvre de sorte à satisfaire les besoins en régime moteur (i.e. les besoins en poussée/propulsion), tout en garantissant la pilotabilité ainsi que l'opérabilité de la turbomachine 100 via le respect de limites de fonctionnement de la turbomachine. Ces limites de fonctionnement portent de manière classique sur des grandeurs physiques relatives :

- aux variables de contrôle considérées, donc a fortiori le débit de carburant Wf injecté dans la chambre de combustion, aussi bien en phase stabilisée qu'en phase transitoire (phase d'accélération ou de décélération),
- une ou plusieurs variables d'état de la turbomachine 100 (et auxquelles il est possible d'accéder via des mesures réalisées au moyen de capteurs équipant la turbomachine). De telles limites de fonctionnement, encore dites « butées d'opérabilité », représentent des seuils au-delà desquels un dysfonctionnement du moteur peut être rencontré (exemple : phénomène de pompage, etc.). Le fait de respecter ces butées d'opérabilité contribue à garantir que la ligne de fonctionnement de la turbomachine 100 est maintenue dans une zone de fonctionnement autorisée, de sorte à ne pas franchir les limitations imposées par la physique des composants équipant la turbomachine 100.

Ainsi, le concepteur d'une turbomachine doit donc essayer d'optimiser le placement de la ligne de fonctionnement en la plaçant le plus haut possible, de façon à bénéficier de meilleurs rendements pour ses compresseurs, tout en gardant une distance (i.e. une marge) suffisante vis à vis des butées d'opérabilité, de sorte à permettre des accélérations/décélérations sûres.

Aussi, dans le but d'améliorer le fonctionnement d'une turbomachine lors de phases transitoires, tout en limitant l'impact des contraintes de conception liées aux butées d'opérabilité, il a notamment été proposé d'hybrider la turbomachine 100 en l'équipant d'une ou plusieurs machines électriques (non représentée(s) sur la figure 1). De telles machines électriques sont configurées pour injecter et/ou prélever une puissance (ou, de manière équivalente, un couple) sur les arbres de rotation. On note que le fait d'améliorer le fonctionnement d'une turbomachine, via lesdites machines électriques, contribue également à réduire l'empreinte environnementale de l'aéronef (i.e. le rendement énergétique est amélioré).

Le document WO2016/020618 décrit une mise en oeuvre dans laquelle une ou plusieurs machines électriques sont utilisées. Cela étant, cette mise en oeuvre reste peu précise quant à la manière dont sont pilotées les machines électriques. En particulier, il n'est pas proposé de stratégie explicite et reproductible de pilotage des machines électriques pour optimiser le fonctionnement et l'opérabilité de la turbomachine. Le document FR3087491 A1 divulgue également un procédé de contrôle d'une turbomachine selon l'art antérieur.

D'une manière générale, on cherche une stratégie générique de contrôle du fonctionnement d'une turbomachine hybridée permettant d'exploiter pleinement les capacités issues de l'hybridation, tout en minimisant les difficultés inhérentes à l'exploitation de celle-ci, à savoir :

- la mise en oeuvre d'un contrôle multivariable (il s'agit en effet de gérer la commande du débit de carburant mais également les commandes des machines électriques),
- la gestion coordonnée entre des moyens matériels et/ou logiciels dédiés au contrôle du débit de carburant d'une part et ceux dédiés au contrôle des machines électriques d'autre part.

Exposé de l'invention

La présente invention a pour objectif de remédier à tout ou partie des inconvénients de l'art antérieur, notamment ceux exposés ci-avant, en proposant une solution qui permette de contrôler une turbomachine équipée d'un générateur de gaz et comprenant au moins une machine électrique de manière plus efficace que les solutions de l'art antérieur. Par « plus efficace », il est fait référence ici à une solution dont la complexité de mise en oeuvre est contenue et qui permet d'exploiter la redondance de contrôle apportée par une ou plusieurs machines électriques pour répondre de manière optimale aux besoins de propulsion ainsi qu'aux besoins d'injection/prélèvement de puissance, de sorte à garantir la pilotabilité ainsi que l'opérabilité de la turbomachine dans le respect des limites de fonctionnement de celle-ci.

A cet effet, et selon un premier aspect, l'invention concerne un procédé de contrôle d'une turbomachine équipée d'un générateur de gaz comprenant des arbres de rotation respectivement basse pression et haute pression, la turbomachine comportant au moins une machine électrique formant un dispositif d'injection/prélèvement de puissance sur un desdits arbres de rotation. En outre, ledit procédé comporte des étapes incluses dans une boucle de contrôle et comprenant :

- une détermination, pour au moins un arbre et en fonction d'une consigne de régime associée audit au moins un arbre, d'une variation dU d'une commande de puissance mécanique,
- une détermination, pour l'ensemble des machines électriques et en fonction d'une consigne d'injection/prélèvement associée audit ensemble de machines électriques, d'une variation dPelec d'une commande d'injection/prélèvement de puissance,
- une détermination d'une commande multivariable comportant une composante de débit de carburant ainsi qu'une composante d'injection/prélèvement de puissance pour chaque machine électrique, ladite commande multivariable étant déterminée de sorte à :

    • optimiser une contrainte de suivi desdites variations dU et dPelec,
    • respecter des limites de fonctionnement de la turbomachine.

Ainsi, selon le procédé de contrôle selon l'invention, il est dans un premier temps déterminé lesdites variations dU et dPelec.

Plus particulièrement, la détermination de la variation dU a pour objectif d'assurer le besoin en propulsion de la turbomachine. Il est donc ici question de contrôle en termes de puissance mécanique totale, pour le ou les arbres concernés au moment où ladite variation dU est déterminée.

La détermination de la variation dPelec, quant à elle, a pour objectif d'assurer le besoin en injection/prélèvement de puissance par le ou les machines électriques. La consigne d'injection/prélèvement traduit un besoin du pilotage énergétique global de l'aéronef. Il s'agit donc d'une consigne de puissance électrique totale à échanger entre la turbomachine et le réseau électrique de l'aéronef, de sorte à assurer la gestion énergétique de la turbomachine.

Le procédé de contrôle selon l'invention se distingue néanmoins de l'art antérieur en ce qu'il propose de contrôler la turbomachine en déterminant une commande qui réalise une synthèse des besoins de puissance mécanique pour le régime moteur (variation dU) ainsi que des besoins de puissance électrique pour le fonctionnement de la ou des machines électriques (variation dPelec), de sorte à assurer la gestion énergétique globale de la turbomachine.

Dit encore autrement, à la différence de l'art antérieur où les variations dU et dPelec sont gérées de manière séparée pour obtenir des commandes de contrôle de la turbomachine, le procédé de contrôle selon l'invention propose avantageusement de prendre appui sur lesdites variations dU et dPelec afin de déterminer une commande multivariable optimale visant à respecter le suivi de ces variations ainsi que des limites de fonctionnement de la turbomachine. La commande multivariable correspond donc à la solution d'un problème d'optimisation sous contraintes.

Cette manière de procéder (détermination d'une commande multivariable par optimisation) est particulièrement avantageuse en ce qu'elle permet de satisfaire de manière unifiée les besoins propulsifs mais également les besoins d'injection/prélèvement, que ce soit en mode stabilisé ou bien en mode transitoire, et dans les limites d'opérabilité de la turbomachine.

Dans des modes particuliers de mise en oeuvre, le procédé de contrôle peut comporter en outre l'une ou plusieurs des caractéristiques suivantes, prises isolément ou selon toutes les combinaisons techniquement possibles.

Dans des modes particuliers de mise en oeuvre, les étapes incluses dans la boucle de contrôle comportent en outre une étape de détermination d'une commande monovariable de débit de carburant en fonction de ladite variation dU, de limites de fonctionnement de la turbomachine ainsi que de valeurs courantes d'injection/prélèvement pour ledit ensemble de machines électriques, l'unique commande de débit de carburant destinée à être exécutée pour le contrôle de la turbomachine, parmi ladite commande monovariable et la composante de débit de carburant de la commande multivariable, étant ladite commande monovariable.

Ladite commande monovariable offre la possibilité de calculer, en respectant des limites de fonctionnement de la turbomachine et indépendamment d'une coordination avec des moyens de contrôle spécifiquement dédiés à la ou les machines électriques, la variation en débit carburant nécessaire pour satisfaire le besoin de contrôle en termes de propulsion, tout en tenant compte (par exemple en pré-compensant) des variations d'injection/prélèvement courantes (i.e. instantanées) obtenues à partir de mesures réalisées sur la turbomachine.

En outre, la commande monovariable prend le pas (i.e. elle est prioritaire) par rapport à la composante de débit de carburant de la commande multivariable. De telles dispositions permettent d'assurer une tolérance face à d'éventuelles pannes sur les chaînes électriques (variations d'injections/prélèvements de puissance non contrôlés, réseau électrique qui n'arrive pas à satisfaire les besoins définis par les commandes déterminées pour les machines électriques, retard dans l'application desdites commandes une fois celles-ci transmises à des moyens de contrôle dédiés auxdites machines électriques, etc.), ou à une mauvaise coordination entre le contrôle du débit de carburant et le contrôle des machines électriques.

Dans des modes particuliers de mise en oeuvre, les limites de fonctionnement comportent :

- une limite inférieure et une limite supérieure d'un rapport entre les pressions en sortie et en entrée d'un compresseur haute pression appartenant au générateur de gaz, de sorte à assurer une protection contre les phénomènes de pompage et d'extinction de flamme, et/ou
- pour au moins une turbine appartenant au générateur de gaz parmi une turbine basse pression et une turbine haute pression, une limite supérieure de température de ladite turbine.

Dans des modes particuliers de mise en oeuvre, la turbomachine comporte une première machine électrique formant un dispositif d'injection/prélèvement de puissance sur l'arbre de rotation basse pression et une deuxième machine électrique formant un dispositif d'injection/prélèvement de puissance sur l'arbre de rotation haute pression.

Dans des modes particuliers de mise en oeuvre, la contrainte de suivi des variations dU et dPelec s'écrit :

$$\begin{bmatrix} a & b & c \\ 0 & d & e \end{bmatrix} \begin{bmatrix} dWf\_MULTI \\ dU1\_MULTI \\ dU2\_MULTI \end{bmatrix} = \begin{bmatrix} dU \\ dPelec \end{bmatrix} + \begin{bmatrix} v1 \\ v2 \end{bmatrix}$$

où :

- a, b, c, d et e sont des coefficients donnés,
- dWf_MULTI, dU1_MULTI et dU2_MULTI correspondent respectivement à des variations bornées de la composante de débit de carburant, de la composante d'injection/prélèvement de puissance pour la première machine électrique et de la composante d'injection/prélèvement de puissance pour la deuxième machine électrique,
- la matrice V dont les composantes v1 et v2 sont données correspond à un paramètre de régularisation permettant de relâcher la contrainte de suivi des variations dU et dPelec,

et dans lequel l'optimisation de la contrainte de suivi consiste à minimiser une fonction de coût J ayant pour expression :

$$J = \begin{bmatrix} dWf\_MULTI \\ dU1\_MULTI \\ dU2\_MULTI \end{bmatrix}^T \times Q1 \times \begin{bmatrix} dWf\_MULTI \\ dU1\_MULTI \\ dU2\_MULTI \end{bmatrix} + \begin{bmatrix} v1 \\ v2 \end{bmatrix}^T \times Q2 \times \begin{bmatrix} v1 \\ v2 \end{bmatrix}$$

où Q1 et Q2 sont des matrices de poids données.

La matrice V, dont les composantes v1 et v2 sont données, permet de s'écarter des objectifs de contrôle quand leur réalisation n'est plus possible sous la contrainte de suivi des variations dU et dPelec, tout en respectant les limites de fonctionnement de la turbomachine.

La matrice Q1 est une matrice de poids qui permet de minimiser les variations des variables de contrôle, et qui peut être par exemple choisie de sorte à privilégier l'utilisation d'une variable de contrôle sur autre dans le cadre du contrôle de la turbomachine.

La matrice Q2, quant à elle, est une matrice poids qui permet de minimiser l'écart par rapport aux objectifs de contrôle, et qui peut par exemple être choisie de sorte à privilégier un objectif de contrôle par rapport à un autre. A titre d'exemple nullement limitatif, la matrice Q2 peut être choisie de sorte que la régulation du régime moteur est privilégiée pendant des phases transitoires vis-à-vis des injections/prélèvements électriques.

Dans des modes particuliers de mise en oeuvre, ledit au moins un arbre considéré lors de la détermination de la variation dU est l'arbre de rotation basse pression si la boucle de contrôle est mise en oeuvre pendant une phase de fonctionnement stabilisée de la turbomachine, et l'arbre de rotation haute pression si boucle de contrôle est mise en oeuvre pendant une phase de fonctionnement transitoire de la turbomachine.

Selon un autre aspect, l'invention concerne un programme d'ordinateur comportant des instructions pour la mise en oeuvre d'un procédé de contrôle selon l'invention lorsque ledit programme d'ordinateur est exécuté par un ordinateur.

Ce programme peut utiliser n'importe quel langage de programmation, et être sous la forme de code source, code objet, ou de code intermédiaire entre code source et code objet, tel que dans une forme partiellement compilée, ou dans n'importe quelle autre forme souhaitable.

Selon un autre aspect, l'invention concerne un support d'informations ou d'enregistrement lisible par un ordinateur sur lequel est enregistré un programme d'ordinateur selon l'invention.

Le support d'informations ou d'enregistrement peut être n'importe quelle entité ou dispositif capable de stocker le programme. Par exemple, le support peut comporter un moyen de stockage, tel qu'une ROM, par exemple un CD ROM ou une ROM de circuit microélectronique, ou encore un moyen d'enregistrement magnétique, par exemple une disquette (floppy dise) ou un disque dur.

D'autre part, le support d'informations ou d'enregistrement peut être un support transmissible tel qu'un signal électrique ou optique, qui peut être acheminé via un câble électrique ou optique, par radio ou par d'autres moyens. Le programme selon l'invention peut être en particulier téléchargé sur un réseau de type Internet.

Alternativement, le support d'informations ou d'enregistrement peut être un circuit intégré dans lequel le programme est incorporé, le circuit étant adapté pour exécuter ou pour être utilisé dans l'exécution du procédé en question.

Selon un autre aspect, l'invention concerne un système de contrôle d'une turbomachine équipée d'un générateur de gaz comprenant des arbres de rotation respectivement basse pression et haute pression, la turbomachine comportant au moins une machine électrique formant un dispositif d'injection/prélèvement de puissance sur un desdits arbres de rotation, ledit système de contrôle comportant :

- un premier module de détermination configuré pour déterminer, pour au moins un arbre et en fonction d'une consigne de régime associée audit au moins un arbre, une variation dU d'une commande de puissance mécanique,
- un deuxième module de détermination configuré pour déterminer, pour l'ensemble des machines électriques et en fonction d'une consigne d'injection/prélèvement associée audit ensemble de machines électriques, une variation dPelec d'une commande d'injection/prélèvement de puissance,
- un troisième module de détermination configuré pour déterminer une commande multivariable comportant une composante de débit de carburant ainsi qu'une composante d'injection/prélèvement de puissance pour chaque machine électrique, ladite commande multivariable étant déterminée de sorte à :

  • optimiser une contrainte de suivi des variations dU et dPelec,
  • respecter des limites de fonctionnement de la turbomachine.

Dans des modes particuliers de réalisation, ledit système de contrôle comporte en outre un quatrième module de détermination configuré pour déterminer une commande monovariable de débit de carburant en fonction de ladite variation dU, de limites de fonctionnement de la turbomachine ainsi que de valeurs courantes d'injection/prélèvement pour ledit ensemble de machines électriques, l'unique commande de débit de carburant destinée à être exécutée pour le contrôle de la turbomachine, parmi ladite commande monovariable et la composante de débit de carburant de la commande multivariable, étant ladite commande monovariable.

Selon un autre aspect, l'invention concerne une turbomachine équipée d'un générateur de gaz comportant des arbres de rotation respectivement basse pression et haute pression, la turbomachine comprenant au moins une machine électrique formant un dispositif d'injection/prélèvement de puissance sur au moins un desdits arbres de rotation ainsi qu'un système de contrôle selon l'invention.

Selon un autre aspect, l'invention concerne un aéronef comportant une turbomachine selon l'invention.

Brève description des dessins

D'autres caractéristiques et avantages de la présente invention ressortiront de la description faite ci-dessous, en référence aux dessins annexés qui en illustrent un exemple de réalisation dépourvu de tout caractère limitatif. Sur les figures :

[Fig. 1] la figure 1 représente schématiquement une turbomachine comportant un générateur de gaz conformément à l'art antérieur ;

[Fig. 2] la figure 2 représente schématiquement, dans son environnement, un mode de réalisation d'une turbomachine selon l'invention ;

[Fig. 3] la figure 3 représente un premier exemple d'architecture matérielle d'un système de contrôle appartenant à la turbomachine de la figure 2 ;

[Fig. 4] la figure 4 représente schématiquement un exemple particulier de fonctionnement d'une boucle de contrôle de la turbomachine de la figure 2, telle que mise en oeuvre au moyen, notamment, du système de contrôle de la figure 3 ;

[Fig. 5] la figure 5 représente schématiquement un exemple particulier de réalisation d'un premier module de détermination appartenant au système de contrôle utilisé pour le fonctionnement de la boucle de contrôle de la figure 4 ;

[Fig. 6] la figure 6 représente schématiquement un exemple particulier de réalisation d'un deuxième module de détermination appartenant au système de contrôle utilisé pour le fonctionnement de la boucle de contrôle de la figure 4 ;

[Fig. 7] la figure 7 représente schématiquement un exemple particulier de réalisation d'un troisième module de détermination appartenant au système de contrôle utilisé pour le fonctionnement de boucle de contrôle de la figure 4 ;

[Fig. 8] la figure 8 représente, sous forme d'ordinogramme, un mode particulier du procédé de contrôle selon l'invention, mis en oeuvre par le système de contrôle de la figure 3;

[Fig. 9] la figure 9 représente schématiquement un deuxième exemple d'architecture matérielle du système de contrôle appartenant à la turbomachine de la figure 2 ;

[Fig. 10] la figure 10 représente schématiquement un autre exemple particulier de fonctionnement de la boucle de contrôle de la turbomachine de la figure 2, telle que mise en oeuvre au moyen, notamment, du système de contrôle de la figure 9 ;

[Fig. 11] la figure 11 représente schématiquement un exemple particulier de réalisation d'un quatrième module de détermination appartenant au système de contrôle utilisé pour le fonctionnement de la boucle de contrôle de la figure 10 ;

[Fig. 12] la figure 12 représente, sous forme d'ordinogramme, un mode particulier du procédé de contrôle selon l'invention, mis en oeuvre par le système de contrôle de la figure 9.

Description des modes de réalisation

La présente invention appartient au domaine du contrôle (i.e. de la régulation) du fonctionnement d'une turbomachine comportant un générateur de gaz.

Pour la suite de la description, on considère de manière nullement limitative le cas d'une turbomachine du type turboréacteur à double flux et double corps pour aéronef, comme par exemple un avion civil apte à transporter des passagers. Il convient toutefois de noter que l'invention reste applicable quel que soit le type de turbomachine considéré, dès lors que cette dernière comporte un générateur de gaz. Par exemple, il est possible d'envisager un turbomoteur, un turbofan, etc.

En outre, l'invention reste également applicable pour tout type d'aéronef (avion, hélicoptère, etc.), mais aussi, plus largement, pour tout type de machine industrielle équipée d'une turbomachine selon l'invention.

La figure 2 représente schématiquement, dans son environnement, un mode de réalisation d'une turbomachine T selon l'invention.

La turbomachine T admet une configuration générale structurelle au moins conforme à l'état de l'art. A titre d'exemple nullement limitatif, une telle configuration générale a été décrite ci-avant en référence à la figure 1.

Ainsi, la turbomachine T comprend, d'amont en aval dans le sens de l'écoulement des gaz, une soufflante 10, un compresseur basse pression 11, un compresseur haute pression 12, une chambre de combustion 13 qui reçoit une commande de débit de carburant, une turbine haute pression 14, une turbine basse pression 15 et une tuyère primaire d'échappement 16. Le compresseur basse pression (ou BP) 11 et la turbine basse pression 15 sont reliés par un arbre basse pression 21 et forment ensemble un corps basse pression. Le compresseur haute pression (ou HP) 12 et la turbine haute pression 14 sont reliés par un arbre haute pression 22 et forment ensemble, avec la chambre de combustion 13, un corps haute pression. La soufflante 10, qui est entraînée par l'arbre BP 21, comprime l'air ingéré. Cet air se divise en aval de la soufflante 10 entre un flux d'air secondaire qui est dirigé directement vers une tuyère secondaire (non représentée) par laquelle il est éjecté pour participer à la poussée fournie par la turbomachine T, et un flux dit primaire qui pénètre dans le générateur de gaz, constitué par le corps basse pression et le corps haute pression, puis qui est éjecté dans la tuyère primaire 16.

De manière connue, le fonctionnement de la turbomachine T est commandé par un dispositif de régulation pleine autorité, dit « FADEC » 20.

Dans le présent mode de réalisation, et tel qu'illustré par la figure 2, la turbomachine T comporte également deux machines électriques, une première machine électrique ME1 et une deuxième machine électrique ME2. De manière conventionnelle, chaque machine électrique ME1, ME2 forme un dispositif d'injection/prélèvement de puissance sur un desdits arbres de rotation 21, 22. Plus particulièrement, on considère ici que la première machine électrique ME1 (respectivement la deuxième machine électrique ME2) est associée à l'arbre BP 21 (respectivement à l'arbre HP 22). La puissance injectée/prélevée par chaque machine électrique ME1, ME2 sur l'arbre 21, 22 avec lequel elle coopère est générée par ladite machine électrique ME1, ME2 sur réception d'une commande de puissance, comme cela est également détaillé ultérieurement.

Il importe de noter que l'invention ne se limite pas au cas où deux machines électriques sont utilisées pour injecter/prélever des puissances sur les deux arbres BP 21 et HP 22. Ainsi, rien n'exclut par exemple d'envisager d'autres modes de réalisation dans lesquels seule une machine électrique est utilisée, cette unique machine électrique pouvant indifféremment coopérer avec l'arbre BP 21 exclusivement ou bien avec l'arbre HP 22 exclusivement.

De manière conventionnelle, chaque machine électrique ME1, ME2 peut être configurée selon un premier mode de fonctionnement, de sorte à générer une puissance apte à entraîner l'arbre qui lui est associé. Un tel premier mode de fonctionnement est classiquement dénommé « mode de fonctionnement moteur ». Chaque machine électrique ME1, ME2 peut également être configurée selon un deuxième mode de fonctionnement, de sorte à générer une puissance apte à prélever de l'énergie mécanique sur l'arbre qui lui est associé, cette énergie prélevée pouvant par exemple être utilisée à des fins d'alimentation de systèmes non propulsifs comme par exemple le système de climatisation ou de dégivrage de la turbomachine T, voire également de la charge de batteries. Un tel deuxième mode de fonctionnement est classiquement dénommé « mode de fonctionnement générateur ».

L'homme du métier peut par exemple se référer au document WO2016/020618 en ce qui concerne les principes généraux de réalisation et de mise en oeuvre d'une machine électrique pour une turbomachine, ces aspects n'étant dès lors pas détaillés plus avant ici.

Il est à noter que chaque machine électrique peut également être vue comme un dispositif d'injection/prélèvement de couple mécanique sur l'arbre avec lequel elle coopère. En effet, il est tout à fait équivalent de considérer une injection/un prélèvement sur un arbre en termes de puissance ou bien de couple, ces deux grandeurs physiques étant liées l'une à l'autre via la vitesse de rotation de l'arbre en question, comme cela est bien connu de l'homme du métier. Aussi, sans que cela n'induise de confusion, la seule grandeur physique désormais considérée dans la suite de la description concernant ces aspects est la puissance.

Conformément à l'invention, la turbomachine T comporte également un système de contrôle SYS_C configuré pour réaliser des traitements permettant de contrôler de manière coordonnée le débit de carburant dans la chambre de combustion 13 et les puissances injectées/prélevées par les machines électriques ME1, ME2, en mettant en oeuvre un procédé de contrôle selon l'invention, décrit en détail ci-après et dont les étapes sont incluses dans une boucle de contrôle de la turbomachine T.

Dans le présent mode de réalisation, ledit système de contrôle SYS_C est intégré dans le FADEC 20, plus particulièrement dans le calculateur de ce dernier. Aucune limitation n'est toutefois attachée à la localisation dudit système de contrôle SYS_C au sein de la turbomachine T dès lors que ce dernier est en mesure de mettre en oeuvre le procédé de contrôle selon l'invention, et permettre ainsi de contrôler la turbomachine T de manière particulièrement efficace.

La figure 3 représente schématiquement un premier exemple d'architecture matérielle du système de contrôle SYS_C appartenant à la turbomachine de la figure 2.

Tel qu'illustré par la figure 3, le système de contrôle SYS_C selon l'invention dispose de l'architecture matérielle d'un ordinateur. Ainsi, ledit système de contrôle SYS_C comporte, notamment, un processeur 1_1, une mémoire vive 2_1, une mémoire morte 3_1 et une mémoire non volatile 4_1. Il dispose en outre de moyens de communication 5_1.

La mémoire morte 3_1 du système de contrôle SYS_C constitue un support d'enregistrement conforme à l'invention, lisible par le processeur et sur lequel est enregistré un programme d'ordinateur PROG_1 conforme à l'invention, comportant des instructions pour l'exécution d'étapes du procédé de contrôle selon l'invention. Le programme PROG_1 définit des modules fonctionnels du système de contrôle SYS_C, qui s'appuient ou commandent les éléments matériels 2_1 à 5_1 dudit système de contrôle SYS_C cités précédemment, et qui comprennent notamment :

- un premier module de détermination MOD_DET1 configuré pour déterminer, pour au moins un arbre 21, 22 et en fonction d'une consigne de régime N1_REQ, N2_REQ associée audit au moins un arbre 21, 22, une variation dU d'une commande U de puissance mécanique (la variation dU, et donc a fortiori la commande U correspondante, est donc générée pour répondre aux besoins de propulsion pour suivre un régime désiré ; la commande U peut donc être qualifiée de commande de puissance mécanique « totale »),
- un deuxième module de détermination MOD_DET2 configuré pour déterminer, pour les deux machines électriques M1, M2 et en fonction d'une consigne d'injection/prélèvement Pelec_REQ associée auxdites deux machines électriques M1, M2, une variation dPelec d'une commande Pelec d'injection/prélèvement de puissance,
- un troisième module de détermination MOD_DET3 configuré pour déterminer une commande multivariable C_MULTI comportant une composante de débit de carburant Wf_MULTI ainsi qu'une composante d'injection/prélèvement de puissance U1_MULTI, U2_MULTI pour chaque machine électrique M1, M2, ladite commande multivariable C_MULTI étant déterminée de sorte à :

  • optimiser une contrainte de suivi desdites variations dU et dPelec,
  • respecter des limites de fonctionnement de la turbomachine T.

La manière dont les différentes variations dU et dPelec, ainsi que les différentes commandes Wf_MULTI, U1_MULTI, U2_MULTI sont déterminées par les premier, deuxième et troisième modules MOD_DET1, MOD_DET2, MOD_DET3 est détaillée ultérieurement au travers de plusieurs modes de mise en oeuvre du procédé de contrôle selon l'invention.

Conformément à l'invention, on note que le terme « variation » fait référence à une différentielle en temps de la variable concerné par ladite variation. La manière dont une commande peut être déterminée à partir de la variation qui a été déterminée pour elle est bien connue de l'homme de l'art. De manière succincte, on rappelle qu'une telle détermination de commande peut s'effectuer grâce à des moyens configurés de manière matérielle et/ou logicielle pour réaliser une intégration temporelle de la variation associée à ladite commande. Par exemple, et à titre purement illustratif, si U_OLD correspond à la commande de puissance totale déterminée au cours de l'itération précédente de la boucle de contrôle, la nouvelle commande U est égale à U_OLD + dU x dt, où dt correspond au pas de discrétisation temporelle avec lequel la boucle de contrôle est itérée (ledit pas de discrétisation étant en correspondance avec la fréquence de calcul du FADEC 20 ; par exemple ladite fréquence de calcul est comprise entre 50Hz et 100Hz, de sorte que le pas de discrétisation varie entre 10ms et 20ms).

La détermination de la variation dU a pour objectif d'assurer le besoin en propulsion de la turbomachine T. Il est donc ici question de contrôle en termes de puissance mécanique totale, pour le ou les arbres concernés au moment où ladite variation dU est déterminée.

La détermination de la variation dPelec, quant à elle, a pour objectif d'assurer le besoin en injection/prélèvement de puissance par le ou les machines électriques. La consigne d'injection/prélèvement traduit un besoin du pilotage énergétique global de l'aéronef. Il s'agit donc d'une consigne de puissance électrique totale à échanger entre la turbomachine T et le réseau électrique de l'aéronef, de sorte à assurer la gestion énergétique de la turbomachine T.

Les moyens de communication 5_1 permettent notamment au système de contrôle SYS_C d'émettre les commandes de débit de carburant Wf_MULTI et d'injection/prélèvement de puissance U1_MULTI, U2_MULTI vers respectivement le système de carburant SYS_CARBU de la turbomachine T (ledit système de carburant permet de piloter le débit de carburant dans la chambre de combustion 13) et les machines électriques ME1, ME2. En conséquence, ledit système de carburant SYS_CARBU ainsi que chacune desdites machines électriques ME1, ME2 sont respectivement équipées de moyens de communication configurés pour recevoir les commandes qui leur sont destinées. Les moyens de communication 5_1 permettent également au système de contrôle SYS_C de recevoir un ensemble E_S de signaux obtenus à partir de mesures réalisées sur la turbomachine T, ces mesures étant acquises par des moyens d'acquisition (non représentés sur les figures) équipant cette dernière. Les moyens de communication 5_1 comportent par exemple un bus de données informatiques apte à la transmission desdites commandes ainsi que desdites mesures. Selon un autre exemple, les moyens de communication 5_1 comportent une interface de communication, filaire ou non filaire, apte à mettre en oeuvre tout protocole adapté connu de l'homme du métier (Ethernet, Wifi, Bluetooth, 3G, 4G, 5G, etc.).

De manière conventionnelle, lesdites mesures correspondent à des mesures de grandeurs physiques qui portent, notamment, sur les variables de contrôle considérées, c'est-à-dire ici le débit de carburant et les puissances injectées/prélevées par chacune des machines électriques ME1, ME2. Outre, le fait de porter sur les variables de contrôle considérées, lesdites mesures peuvent également porter sur des variables d'état de la turbomachine T, comme par exemple une ou plusieurs pressions en entrée et/ou sortie et/ou au sein de composants de la turbomachine T, un ou plusieurs régimes de rotation d'arbres, la vitesse de l'aéronef, une ou plusieurs températures en entrée et/ou sortie et/ou au sein de composants de la turbomachine T, etc. D'une manière générale, aucune limitation n'est attachée aux variables d'état pouvant faire l'objet de mesures dans le cadre de la présente invention, l'homme du métier étant apte à déterminer les mesures qu'il convient de réaliser afin que le procédé de contrôle selon l'invention puisse être exécuté.

Les moyens d'acquisition configurés pour acquérir lesdites mesures comportent de manière connue une chaine d'acquisition comprenant un capteur dédié à la mesure de chacune desdites grandeurs. Chacun de ces capteurs forme un élément sensible configuré pour fournir un signal électrique analogique en fonction des variations de la grandeur physique à laquelle il est associé. Ladite chaine d'acquisition comporte par exemple aussi une carte d'acquisition configurée pour conditionner le signal électrique fourni par un capteur, par exemple par amplification et / ou filtrage. Lesdits moyens d'acquisition comportent également, en sortie de la chaine d'acquisition, un convertisseur analogique/numérique configuré pour numériser un signal électrique conditionné. D'une manière générale, la configuration de tels moyens d'acquisition est bien connue de l'homme du métier et n'est par conséquent détaillée plus avant ici.

Les limites de fonctionnement de la turbomachine T portent, notamment, sur les variables de contrôle considérées. Autrement dit, conformément à la présente invention, lesdites limites de fonctionnement sont, notamment, des limites appliquées aux différentes composantes de la commande multivariable C_MULTI (i.e. aux variables de contrôle considérées). En pratique, de telles limites de fonctionnement correspondent, pour chaque composante de la commande multivariable C_MULTI, à une limite inférieure et une limite supérieure données. Pour la suite de la description, ces limites inférieures et supérieures sont respectivement notées :

- Wf_MULTI_MIN et Wf_MULTI_MAX pour la composante Wf_MULTI,
- U1_MULTI_MIN et U1_MULTI_MAX pour la composante U1_MULTI,
- U2_MULTI_MIN et U2_MULTI_MAX pour la composante U2_MULTI.

De telles limites inférieures et supérieures permettent de tenir compte des éventuelles saturations des différentes composantes de la commande multivariable C_MULTI. En outre, et comme cela est détaillé plus loin, des limites inférieures et supérieures sont également associées aux variations desdites composantes et permettent de prendre en compte des limitations de leurs bandes passantes respectives.

De manière conventionnelle, ledit ensemble de signaux E_S comportent, pour le contrôle de la turbomachine T et au regard des composantes de la commande multivariable C_MULTI :

- un signal de puissance S_P1 (respectivement un signal de puissance S_P2) injectée/prélevée sur l'arbre BP 21 (respectivement sur l'arbre HP 22). On note que de tels signaux S_P1, S_P2 font référence à une puissance instantanée injectée/prélevée sur un arbre,
- un signal de régime S_N1 (respectivement S_N2) de l'arbre BP 21 (respectivement de l'arbre HP 22),
- un signal de débit de carburant S_Wf dans la chambre de combustion 13.

Bien entendu, en corrélation avec ce qui a été détaillé ci-avant concernant les grandeurs physiques susceptibles de faire l'objet de mesures, d'autres limites de fonctionnement, en plus de celles portant sur lesdites variables de contrôle, peuvent être envisagées. De telles autres limites de fonctionnement correspondent typiquement à des butées d'opérabilité qui sont définies à partir d'une ou plusieurs variables d'état de la turbomachine T. A cet effet, l'ensemble de signaux E_S peut comporter encore d'autres signaux que lesdits signaux S_P1, S_P2, S_N1, S_N2 et S_Wf, ces autres signaux étant relatifs à ladite ou lesdites variables d'état nécessaires à la définition (i.e. au calcul) desdites butées d'opérabilité.

Selon un exemple de réalisation, les limites de fonctionnement comportent, en plus de celles portant sur lesdites variables de contrôle, une limite inférieure n_MIN et une limite supérieure n_MAX d'un rapport n entre les pressions en sortie et en entrée du compresseur HP 12, de sorte à assurer une protection contre les phénomènes de pompage et d'extinction de flamme. On note que lesdites pressions en sortie et en entrée sont encore connues sous la dénomination « Pt3 » et « Pt25 » dans le domaine du contrôle des turbomachines.

Il est à noter que, en alternative, la protection contre les phénomènes de pompage et d'extinction de flamme peut également être assurée en implémentant non pas des limites inférieure et supérieure portant sur le rapport Pt3/Pt25, mais des limites inférieure et supérieure d'un rapport entre le signal de débit de carburant S_Wf et une variable d'état correspondant à la pression statique mesurée en sortie de la chambre de combustion 13, encore connue sous la dénomination « Ps3 » dans le domaine du contrôle des turbomachines. Ces aspects sont bien connus de l'homme du métier si bien qu'ils ne sont pas davantage détaillés ici.

Selon un autre exemple de réalisation, ou bien en complément de l'exemple précédent relatif à la protection contre les phénomènes de pompage et d'extinction de flamme, les limites de fonctionnement comportent, en plus de celles portant sur lesdites variables de contrôle, et pour chacune desdites turbines HP 14 et BP 15, une limite supérieure de température de la turbine considérée. Dans le domaine du contrôle des turbomachines, les températures en question sont encore connues sous la dénomination « T49 » et « T50 » pour ce qui concerne respectivement les turbines HP 14 et BP 15.

Rien n'exclut bien entendu d'envisager encore d'autres exemples de limites de fonctionnement, prises isolément ou bien en combinaison, en tant que butées d'opérabilité. Par exemple, des butées d'opérabilité correspondant à une butée d'accélération de type C/P et/ou à une butée relative à un régime mécanique N1 et/ou une butée relative à un régime mécanique N2, etc. sont envisageables. D'une manière générale, aucune limitation n'est attachée au nombre de butées d'opérabilité pouvant être considéré dans la présente invention.

En outre, il importe de noter que l'invention n'est pas restreinte au cas où les signaux de l'ensemble E_S résultent directement de mesures réalisées sur la turbomachine T. En effet, l'expression « signaux obtenus » couvre également le cas où des signaux parmi ledit ensemble E_S correspondent à des signaux de synthèse, c'est-à-dire des signaux qui ne sont pas fournis directement pas les moyens d'acquisition, mais estimés, à partir des signaux acquis, grâce à un modèle (généralement non linéaire) du fonctionnement de la turbomachine T. A titre d'exemple nullement limitatif, un signal de synthèse est un signal relatif à une variable d'état qui n'est pas directement mesurable par un capteur, ou bien encore un signal plus complexe comme un signal de marge de pompage restante. Ces aspects étant bien connus de l'homme du métier, ils ne sont pas décrits davantage ici.

Pour la suite de la description, et à des fins de simplification de celle-ci, on considère désormais de manière nullement limitative que les seules butées d'opérabilité prises en compte sont lesdites limites inférieure n_MIN et supérieure n_MAX mentionnées ci-avant et qui permettent d'assurer une protection contre les phénomènes de pompage et d'extinction de flamme, ainsi qu'une limite supérieure t_MAX associée à la température au niveau de la turbine HP 14.

En conséquence, il est également considéré pour la suite de la description que l'ensemble de signaux E_S comprend, dans le présent exemple, les signaux S_P1, S_P2, S_N1, S_N2 et S_Wf associées aux variables de contrôle, mais également des signaux S_Pt3, S_Pt25 et S_T49 respectivement associées aux grandeurs Pt3, Pt25 et T49 décrites auparavant.

Comme mentionné ci-avant, la variation dU de puissance totale est déterminée par le premier module de détermination MOD_DET1 pour au moins un arbre 21, 22. Le nombre d'arbres concernés par ladite variation dU peut par exemple dépendre de la phase de vol dans laquelle se trouve l'aéronef au moment où ladite variation dU est déterminée.

Ainsi, selon un exemple de réalisation, ledit au moins un arbre considéré lors de la détermination de la variation dU est :

- l'arbre de rotation BP 21 si la boucle de contrôle est mise en oeuvre pendant une phase de fonctionnement stabilisée de la turbomachine T, et
- l'arbre de rotation HP 22 si la boucle de contrôle est mise en oeuvre pendant une phase de fonctionnement transitoire de la turbomachine T.

A cet effet, le premier module de détermination MOD_DET1 comprend par exemple un premier sous-module dédié à l'arbre BP 21 et configuré pour déterminer la variation dU lors d'une phase de fonctionnement stabilisée, ainsi qu'un second sous-module dédié à l'arbre HP 22 pour déterminer la variation dU lors d'une phase de fonctionnement transitoire.

Bien entendu, rien n'exclut d'envisager un exemple inverse de l'exemple précédent, dans lequel l'arbre de rotation BP 21 (respectivement l'arbre de rotation haute pression HP 22) est considéré pendant une phase de fonctionnement transitoire (respectivement pendant une phase de fonctionnement stabilisée).

Il importe également de noter que le fait de considérer que la variation dU est déterminée pour un seul arbre lors d'une phase donnée (stabilisée ou transitoire) de la turbomachine T ne constitue qu'une variante de réalisation de l'invention. D'autres variantes de réalisation sont envisageables, comme par exemple une détermination de la variation dU de sorte que celle-ci comporte, lors de chaque phase de fonctionnement de la turbomachine T, une première composante associée à l'arbre BP 21 et une seconde composante associée à l'arbre HP 22 (ainsi, dans cet exemple, le premier module de détermination MOD_DET1 peut comporter quatre sous-modules, à savoir deux sous-modules dédiés à l'arbre BP 21 pour respectivement les phases stabilisée et transitoire, et deux sous-modules dédiés à l'arbre HP 22 pour respectivement les phases stabilisée et transitoire).

Pour la suite de la description, et à des fins de simplification de celle-ci, on considère aussi désormais que la variation dU est déterminée pour un seul arbre lors d'une phase donnée (stabilisée ou transitoire) de la turbomachine T, conformément à l'exemple décrit ci-avant.

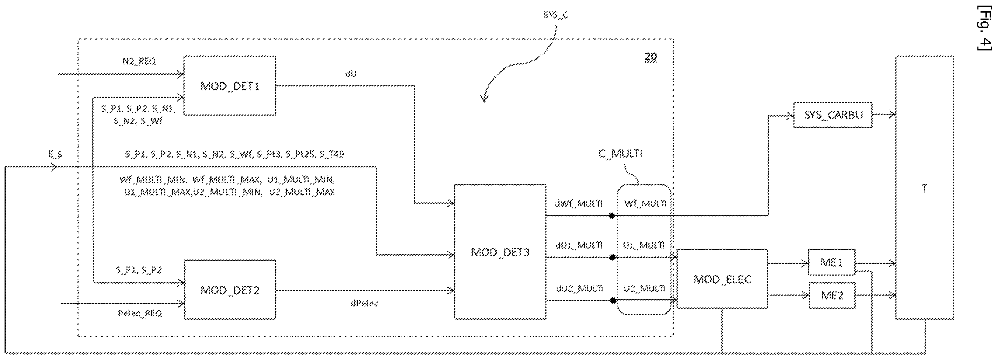

On va désormais décrire un exemple particulier de fonctionnement de la boucle de contrôle de la turbomachine T, telle que mise en oeuvre au moyen, notamment, du système de contrôle SYS_C de la figure 3. La description de cet exemple de fonctionnement est réalisée de manière schématique en référence au schéma bloc de la figure 4.

Pour cet exemple de fonctionnement illustré par la figure 4, on considère de manière nullement limitative que la turbomachine T est dans une phase de fonctionnement transitoire, de sorte que, conformément aux dispositions désormais prises en compte, la variation dU est déterminée pour l'arbre HP 22.

Tel qu'illustré par la figure 4, parmi les signaux de l'ensemble E_S, les signaux S_P1, S_P2, S_N1, S_N2 et S_Wf sont acheminés en entrée du premier module de détermination MOD_DET1. Ledit premier module MOD_DET1 admet également en entrée la consigne de régime N2_REQ associée à l'arbre HP 22. A partir de ces signaux et de cette consigne reçus en entrée, le premier module de détermination MOD_DET1 est en mesure de déterminer la variation dU.

Les signaux S_P1 et S_P2 sont également acheminés en entrée du deuxième module de détermination MOD_DET2. Ledit deuxième module MOD_DET2 admet également en entrée la consigne d'injection/prélèvement Pelec_REQ. A partir de ces signaux et de cette consigne reçus en entrée, le deuxième module de détermination MOD_DET2 est en mesure de déterminer la variation dPelec.

Comme encore illustré par la figure 4, le troisième module de détermination MOD_DET3 reçoit en entrée, notamment, les variations dU et dPelec, les signaux S_P1, S_P2, S_N1, S_N2, S_Wf, S_Pt3, S_Pt25 et S_T49, ainsi que les limites Wf_MULTI_MIN, Wf_MULTI_MAX, U1_MULTI_MIN, U1_MULTI_MAX, U2_MULTI_MIN, U2_MULTI_MAX. A partir de ces signaux et limites reçus en entrée, le troisième module de détermination MOD_DET3 est en mesure de déterminer les composantes Wf_MULTI, U1_MULTI et U2_MULTI de la commande C_MULTI (plus spécifiquement, des variations dWf_MULTI, dU1_MULTI et dU2_MULTI sont dans un premier temps déterminées, de sorte que les composantes Wf_MULTI, U1_MULTI et U2_MULTI soient obtenues par intégration de ces variations).

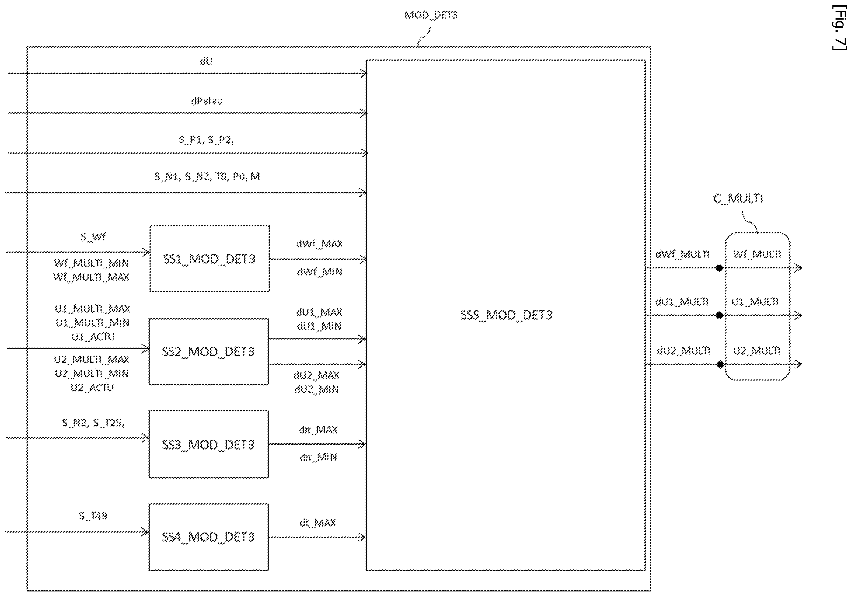

On note qu'encore d'autres entrées peuvent être fournies au troisième module de détermination MOD_DET3, ces aspects étant plus spécifiquement détaillés ci-après, notamment dans un exemple particulier de réalisation dudit module de détermination MOD_DET3 (figure 7).

La composante Wf_MULTI est alors acheminée vers le système de carburant SYS_CARBU de la turbomachine T, de sorte que le débit de carburant injecté dans la chambre de combustion 13 soit conforme à ladite composante Wf_MULTI.

Les composantes U1_MULTI et U2_MULTI, quant à elles, sont acheminées vers un module de contrôle MOD_ELEC spécifiquement dédié au contrôle desdites machines électriques M1, M2, de sorte que celles-ci puissent ensuite injecter/prélever sur chaque arbre la puissance requise.

On note qu'il est également représenté sur la figure un bloc portant la mention « T », la présence de ce bloc visant à symboliser le fait que l'exécution de la commande C_MULTI produit des effets sur (en l'espèce un contrôle de) la turbomachine T.

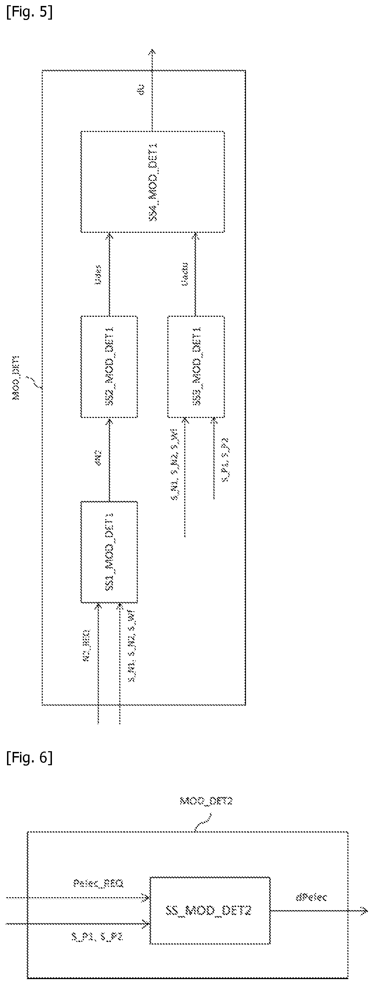

La figure 5 représente schématiquement un exemple particulier de réalisation du premier module de détermination MOD_DET1 appartenant au système de contrôle SYS_C utilisé pour le fonctionnement de la boucle de contrôle de la figure 4.

Dans l'exemple de la figure 5, le premier module de détermination MOD_DET1 comporte différents sous-modules, dont :

- un premier sous-module SS1_MOD_DET1 configuré pour recevoir en entrée les signaux S_N1, S_N2, S_Wf ainsi que la consigne de régime N2_REQ, ainsi que pour déterminer, à partir de ces entrées, une variation désirée dN2 de régime de l'arbre HP 22,
- un deuxième sous-module SS2_MOD_DET1 configuré pour recevoir en entrée ladite variation désirée dN2, ainsi que pour déterminer, à partir de cette entrée, une commande Udes de puissance totale requise,
- un troisième sous-module SS3_MOD_DET1 configuré pour recevoir en entrée les signaux S_N1, S_N2, S_Wf, S_P1 et S_P2, ainsi que pour déterminer (estimer), à partir de ces entrées, la puissance de contrôle courante Uactu délivrée par les machines électriques M1, M2. Par « puissance de contrôle courante », on fait référence ici à la puissance globale injectée/prélevée par l'ensemble des deux machines électriques M1, M2 au moment où la boucle de contrôle est mise en oeuvre,
- un quatrième sous-module SS4_MOD_DET1 configuré pour recevoir en entrée la commande Udes et la puissance de contrôle courante Uactu, ainsi que pour déterminer, à partir de ces entrées, la variation dU de puissance mécanique totale.

La figure 6 représente schématiquement un exemple particulier de réalisation du deuxième module de détermination MOD_DET2 appartenant au système de contrôle SYS_C utilisé pour le fonctionnement de la boucle de contrôle de la figure 4.

Dans l'exemple de la figure 6, le deuxième module de détermination MOD_DET2 comporte un sous-module SS_MOD_DET2 configuré pour recevoir en entrée les signaux S_P1, S_P2 et la consigne Pelec_REQ, ainsi que pour déterminer, à partir de ces entrées, la variation désirée dPelec d'injection/prélèvement de puissance pour l'ensemble des machines électriques M1, M2. La détermination de ladite variation dPelec s'effectue dans cet exemple suivant un schéma de contrôle avec action anticipative (encore dit « feedforward » dans la littérature anglosaxonne).

Il convient de noter que les exemples des figures 5 et 6 ne correspondent qu'à des variantes de réalisation desdits premier et deuxième modules de détermination MOD_DET1, MOD_DET2. D'autres variantes sont bien entendu envisageables, comme par exemple un module de détermination MOD_DET_1 s'appuyant également sur un schéma de contrôle avec action anticipative et/ou un module de détermination MOD_DET_2 n'utilisant pas de contrôle par action anticipative. D'une manière générale, l'homme du métier connait les moyens matériels et/ou logiciels à mettre en oeuvre pour générer les variations dU et dPelec.

La figure 7 représente schématiquement un exemple particulier de réalisation du troisième module de détermination MOD_DET3 appartenant au système de contrôle SYS_C utilisé pour le fonctionnement de la boucle de contrôle de la figure 4.

Dans l'exemple de la figure 7, le troisième module de détermination MOD_DET3 comporte différents sous-modules, dont :

- un premier sous-module SS1_MOD_DET3 configuré pour recevoir en entrée le signal S_Wf et les limites Wf_MULTI_MIN, Wf_MULTI_MAX, ainsi que pour déterminer, à partir de ces entrées, une variation maximale de carburant dWf_MAX et une variation minimale de carburant dWf_MIN,
- un deuxième sous-module SS2_MOD_DET3 configuré pour recevoir en entrée les limites U1_MULTI_MIN, U1_MULTI_MIN, U2_MULTI_MAX, U2_MULTI_MIN, et des valeurs courantes U1_ACTU, U2_ACTU des composantes d'injection/prélèvement de puissance U1_MULTI, U2_MULTI pour chaque machine électrique M1, M2 (par « courantes », on fait référence à des valeurs appliquées avant une nouvelle itération de la boucle de contrôle), ainsi que pour déterminer, à partir de ces entrées, une variation maximale de puissance injectée/prélevée dU1_MAX et une variation minimale de puissance injectée/prélevée dU1_MIN pour la composante U1_MULTI, ainsi qu'une variation maximale de puissance injectée/prélevée dU2_MAX et une variation minimale de puissance injectée/prélevée dU2_MIN pour la composante U2_MULTI,
- un troisième sous-module SS3_MOD_DET3 configuré pour recevoir en entrée un signal S_T25 (correspondant à un signal relatif à une température T25, c'est-à-dire une température en sortie du compresseur BP 11),ainsi que les signaux S_N2, S_Pt3, S_Pt25, ainsi que pour déterminer, à partir de ces entrées, une variation maximale de rapport de pression dn_MAX et une variation minimale de rapport de pression dn_MIN (on note que le troisième sous-module SS3_MOD_DET3 calcule en interne les limites n_MIN, n_MAX mentionnées auparavant, qui ne sont pas des paramètres constants),
- un quatrième sous-module SS4_MOD_DET3 configuré pour recevoir en entrée le signal S_T49, ainsi que pour déterminer, à partir de ces entrées, une variation maximale de température dt_MAX MIN (on note que le quatrième sous-module SS4_MOD_DET3 calcule en interne la limite t_MAX mentionnée auparavant).

Il est à noter que les différentes variations fournies en sortie desdits premier, deuxième, troisième et quatrième sous-modules sont par exemple aussi déterminées de sorte que le contrôle de la turbomachine T s'effectue en assurant des saturations « lisses » ainsi que des désaturations en cas de dépassement.

Par ailleurs, dans l'exemple de la figure 7, le troisième module de détermination MOD_DET3 comporte également un cinquième sous-module SS5_MOD_DET3 configuré pour recevoir en entrée :

- les variations dU et dPelec,
- les signaux S_P1, S_P2,
- les signaux S_N1, S_N2, ainsi que des valeurs (mesurées) des conditions d'entrée de la turbomachine T en terme de température T0 et de pression P0, et encore aussi une valeur du nombre de Mach M,
- les variations dWf_MAX, dWf_MIN, dU1_MAX, dU1_MIN, dU2_MAX, dU2_MIN, dn_MAX, dn_MIN, dt_MAX, ainsi que pour déterminer, à partir de ces entrées, des variations dWf_MULTI, dU1_MULTI et dU2_MULTI pour respectivement chacune des variables de contrôle considérées ici. Par la suite, et de manière identique à ce qui a été décrit ci-avant, les composante Wf_MULTI, U1_MULTI et U2_MULTI sont déterminées par intégration des variations correspondantes dWf_MULTI, dU1_MULTI et dU2_MULTI.

Comme indiqué auparavant, la commande multivariable C_MULTI est déterminée, conformément à l'invention, de sorte à optimiser une contrainte de suivi des variations dU et dPelec, ainsi qu'à respecter les limites de fonctionnement considérées pour la turbomachine T. Dit encore autrement, la commande multivariable C_MULTI peut être vue comme la solution d'un problème d'optimisation sous contraintes.

Selon un exemple de réalisation, ledit problème d'optimisation est formulé de sorte que la contrainte de suivi des variations dU et dPelec s'écrit :

$$\begin{bmatrix} a & b & c \\ 0 & d & e \end{bmatrix} \begin{bmatrix} dWf\_MULTI \\ dU1\_MULTI \\ dU2\_MULTI \end{bmatrix} = \begin{bmatrix} dU \\ dPelec \end{bmatrix} + \begin{bmatrix} v1 \\ v2 \end{bmatrix}$$

Les coefficients a, b, c, d et e sont des coefficients donnés. Plus particulièrement, il s'agit de coefficient traduisant un choix de modélisation des variations dU, dU1_MULTI, dU2_MULTI, dWf_MULTI et dPelec. Dans cet exemple, ce choix de modélisation se traduit selon les formulations suivantes :

$$a \times dWf\_MULTI + b \times dU1\_MULTI + c \times dU2\_MULTI = dU$$

et

$$d \times dU1\_MULTI + e \times dU2\_MULTI = dPelec$$

Autrement dit, les coefficients a, b, c, d et e traduisent le choix selon lequel la dépendance entre variations dU, dU1_MULTI, dU2_MULTI, dWf_MULTI et dPelec est localement linéaire (ou encore de manière équivalente, linéaire par morceaux). On note qu'en pratique ces coefficients a, b, c, d et e sont implémentés sous formes de cartes d'interpolation (fonction de N1, N2, P1, et P2). Il est également possible d'envisager une linéarisation en ligne du modèle utilisé.

Lesdits coefficients a, b, c, d et e sont obtenus avant la mise en oeuvre du procédé de contrôle selon l'invention, par exemple suite à des essais d'identification sur banc, ou bien grâce à l'exploitation de données en vol préenregistrées, ou bien encore au moyen de logiciels de modélisation de turbomachines.

De la même manière, il est considéré dans cet exemple de réalisation que le rapport de pression n et la température T49 ont des variations respectives dn et dT49 modélisées de manière linéaire par rapport aux variations dU1_MULTI, dU2_MULTI, dWf_MULTI, ce qui peut encore s'écrire :

$$a\_\pi \times dWf\_MULTI + b\_\pi \times dU1\_MULTI + c\_\pi \times dU2\_MULTI = d\pi$$

et

$$a\_t \times dWf\_MULTI + b\_t \times dU1\_MULTI + c\_t \times dU2\_MULTI = dT49$$

où les coefficients a_n, b_n, c_n et a_t, b_t, c_t sont également donnés.

De plus, dans l'exemple de réalisation considéré ici, l'optimisation de la contrainte de suivi des variations dU et dPelec consiste à minimiser une fonction de coût J ayant pour expression :

$$J = \begin{bmatrix} dWf\_MULTI \\ dU1\_MULTI \\ dU2\_MULTI \end{bmatrix}^T \times Q1 \times \begin{bmatrix} dWf\_MULTI \\ dU1\_MULTI \\ dU2\_MULTI \end{bmatrix} + \begin{bmatrix} v1 \\ v2 \end{bmatrix}^T \times Q2 \times \begin{bmatrix} v1 \\ v2 \end{bmatrix}$$

On note que l'indice « T » en exposant d'un vecteur/d'une matrice correspond, de manière classique, à l'opérateur de transposition.

En définitive, le problème d'optimisation sous contrainte considéré dans le présent exemple de réalisation comporte une contrainte d'égalité donnée ci-avant au moyen de la matrice comprenant les coefficients a, b, c, d et e, ainsi qu'une pluralité de contraintes d'inégalités, à savoir :

$$dWf\_MIN \leq dWf\_MULTI \leq dWf\_MAX$$

$$dU1\_MIN \leq dU1\_MULTI \leq dU1\_MAX$$

$$dU2\_MIN \leq dU2\_MULTI \leq dU2\_MAX$$

$$d\pi\_MIN \leq d\pi \leq d\pi\_MAX$$

$$dT49 \leq dt\_MAX$$

La matrice V de la contrainte d'égalité, dont les composantes sont v1 et v2, correspond à un paramètre de régularisation permettant de relâcher la contrainte de suivi des variations dU et dPelec. Dit encore autrement, ladite matrice V permet de s'écarter des objectifs de contrôle quand leur réalisation n'est plus possible sous le respect des contraintes d'inégalités données ci-ava nt.

Pour ce qui est de la fonction de coût J, les matrice Q1 et Q2 correspondent à des matrices de poids données.

Plus particulièrement, la matrice Q1 est une matrice de poids qui permet de minimiser les variations des variables de contrôle, et qui peut être par exemple choisie de sorte à privilégier l'utilisation d'une variable de contrôle sur autre dans le cadre du contrôle de la turbomachine T.

La matrice Q2, quant à elle, est une matrice poids qui permet de minimiser l'écart par rapport aux objectifs de contrôle, et qui peut par exemple être choisie de sorte à privilégier un objectif de contrôle par rapport à un autre. A titre d'exemple nullement limitatif, la matrice Q2 peut être choisie de sorte que la régulation du régime moteur est privilégiée pendant des phases transitoires vis-à-vis des injections/prélèvements électriques.

En pratique, la résolution de problème d'optimisation peut s'effectuer de différentes manières. Par exemple, il est possible de reformuler ledit problème d'optimisation en un problème dit « QP » (acronyme de l'expression anglaise « Quadratic Programming »). Suivant cette approche QP, on peut considérer les notations suivantes :

$$X = \begin{bmatrix} dWf\_MULTI \\ dU1\_MULTI \\ dU2\_MULTI \\ v1 \\ v2 \end{bmatrix}$$

- soit      le vecteur des variables à déterminer,

$$P = \begin{bmatrix} dU \\ dPelec \\ dWf\_MIN \\ dU1\_MIN \\ dU2\_MIN \\ d\pi\_MIN \\ dWf\_MAX \\ dU1\_MAX \\ dU2\_MAX \\ d\pi\_MAX \\ dt\_MAX \end{bmatrix}$$

- soit      le vecteur des paramètres pris en considération.

Dès lors, le problème d'optimisation peut s'écrire, conformément à ladite approche QP, sous la forme suivante :

- fonction de coût à minimiser : $J = X^T \Phi X + X^T R P$
- contraintes : $A_1 X = C_1 P$ et $A_2 X \leq C_2 P$

où les matrices $\Phi$, R, $A_1$, $A_2$, $C_1$ et $C_2$ peuvent être déduites en fonction de $Q_1$, $Q_2$ et $\begin{bmatrix} a & b & c \\ 0 & d & e \end{bmatrix}$ .

On retrouve donc ici un problème d'optimisation convexe en le vecteur X paramétré par le vecteur P, pour lequel une solution globale est garantie. La résolution de ce problème est connue de l'homme du métier, et différentes techniques peuvent être utilisées, comme par exemple la méthode des contraintes actives qui consiste à mettre à jour un ensemble de contraintes actives en repérant des directions d'améliorations pendant la recherche de la solution optimale.

Il est à noter que, d'une manière générale, le problème d'optimisation visant la détermination de la commande C_MULTI peut être résolu en ligne en temps réel. En cas de limitation de ressources informatiques, une résolution hors ligne peut bien entendu être envisagée, le problème d'optimisation étant dès lors transformé en une carte d'interpolation à plusieurs variables.

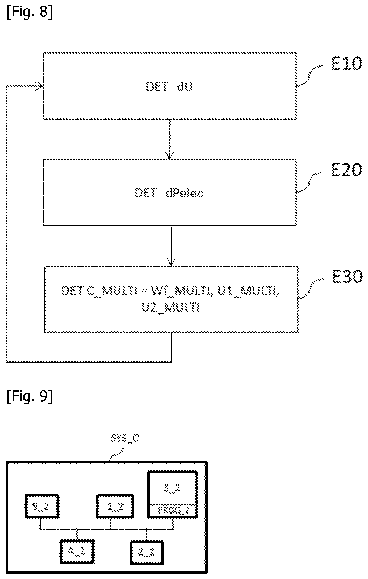

La figure 8 représente, sous forme d'ordinogramme, un mode particulier du procédé de contrôle selon l'invention, mis en oeuvre par le système de contrôle SYS_C de la figure 3.

La description du mode de mise en oeuvre de la figure 8 est réalisée sous les mêmes hypothèses que celles faites dans le cadre de la description de l'exemple de fonctionnement de la boucle de contrôle de la figure 4. Pour rappel, on considère de manière nullement limitative que la turbomachine T est dans une phase de fonctionnement transitoire, de sorte que, la variation dU est déterminée pour l'arbre HP 22.

Tel qu'illustré par la figure 8, le procédé de contrôle comporte tout d'abord une étape E10 de détermination, pour ledit arbre HP 22, de la variation dU de puissance mécanique totale. Cette étape E10 est mise en oeuvre par le premier module de détermination MOD_DET1.

Le procédé de contrôle comporte également une étape E20 de détermination, pour l'ensemble des machines électriques M1, M2, de la variation dPelec d'injection/prélèvement de puissance. Cette étape E20 est mise en oeuvre par le deuxième module de détermination MOD_DET2.

Il est à noter que, dans le mode de mise en oeuvre de la figure 8, l'étape E10 est exécutée avant l'étape E20. Rien n'exclut cependant d'envisager d'autres modes de mise en oeuvre dans lesquels l'étape E20 est exécutée avant l'étape E10, ou bien encore dans lesquels les étapes E10 et E20 sont exécutées en parallèle.

Le procédé de contrôle comporte ensuite une étape E30 de détermination de la commande multivariable C_MULTI. Cette étape E30 est mise en oeuvre par le troisième module de détermination MOD_DET3.

Les composantes de la commande multivariables C_MULTI peuvent dès lors être transmises aux actionneurs concernés (machines électriques M1 et M2, système carburant SYS_CARBU), de sorte à permettre le contrôle de la turbomachine T.

Les étapes E10, E20 et E30 sont par la suite itérées de sorte à permettre un contrôle dans le temps de la turbomachine T. La fréquence à laquelle lesdites étapes E10, E20 et E30 sont itérées correspond à la fréquence de calcul du FADEC 20, par exemple une fréquence comprise entre 50 Hz et 100 Hz.

La suite de la description concerne un autre exemple de réalisation du système de contrôle SYS_C. Dans son principe général, cet autre exemple de réalisation reprend l'ensemble des caractéristiques techniques décrites ci-avant, mais vise également à fournir au système de contrôle SYS_C une fonctionnalité additionnelle (via un quatrième module de détermination décrit ci-après) permettant d'assurer une tolérance face à d'éventuelles pannes sur les chaînes électriques (variations d'injections/prélèvements de puissance non contrôlés, réseau électrique qui n'arrive pas à satisfaire les besoins définis par les commandes U1 et U2, retard dans l'application des commandes U1 et U2 une fois celles-ci transmises au module de contrôle MOD_ELEC, etc.), ou à une mauvaise coordination entre le contrôle du débit de carburant et le contrôle des machines électriques M1, M2.

On note que, dans ledit autre mode de réalisation, la turbomachine T admet une configuration générale structurelle conforme à celle décrite ci-avant en référence à la figure 2. Aussi, les signes de référence de la figure 2 relatifs aux composants mécaniques de la turbomachine T sont repris ci-après.

Par ailleurs, pour ledit autre mode de réalisation, on considère que l'ensemble de signaux E_S comportent, pour le contrôle de la turbomachine T, les signaux S_P1, S_P2, S_N1, S_N2 et S_Wf déjà décrits auparavant, mais également un signal de variation de puissance S_dP1 (respectivement un signal de variation de puissance S_dP2) injectée/prélevée sur l'arbre BP 21 (respectivement sur l'arbre HP 22).

La figure 9 représente schématiquement un deuxième exemple d'architecture matérielle du système de contrôle SYS_C appartenant à la turbomachine T de la figure 2.

Dans l'exemple de la figure 9, le système de contrôle SYS_C selon l'invention dispose de l'architecture matérielle d'un ordinateur, et comporte, notamment, un processeur 1_2, une mémoire vive 2_2, une mémoire morte 3_2 et une mémoire non volatile 4_2. Il dispose en outre de moyens de communication 5_2.

La mémoire morte 3_2 du système de contrôle SYS_C constitue un support d'enregistrement conforme à l'invention, lisible par le processeur et sur lequel est enregistré un programme d'ordinateur PROG_2 conforme à l'invention, comportant des instructions pour l'exécution d'étapes du procédé de contrôle selon l'invention. Le programme PROG_2 définit des modules fonctionnels du système de contrôle SYS_C, qui s'appuient ou commandent les éléments matériels 2_2 à 5_2 dudit système de contrôle SYS_C cités précédemment, et qui comprennent notamment :

- les premier, deuxième et troisième modules de détermination MOD_DET1, MOD_DET2, MOD_DET3 décrits ci-avant,
- un quatrième module de détermination MOD_DET4 configuré pour déterminer une commande monovariable Wf_MONO de débit de carburant en fonction de la variation dU, des limites de fonctionnement de la turbomachine ainsi que de valeurs courantes d'injection/prélèvement pour ledit ensemble de machines électriques (les valeurs courantes faisant référence ici aux signaux S_P1, S_P2, S_dP1, S_dP2).

En outre, dans ledit deuxième exemple de la figure 9, les troisième et quatrième modules MOD_DET3, MOD_DET4 (et donc a fortiori le système de contrôle SYS_C dans son entièreté) sont configurés de sorte que l'unique commande de débit de carburant destinée à être exécutée pour le contrôle de la turbomachine T, parmi ladite commande Wf_MONO et la composante de débit de carburant Wf_MULTI de la commande multivariable C_MULTI, est ladite commande Wf_MONO.

En d'autres termes, pour le contrôle de la turbomachine T, l'exécution de la commande Wf_MONO est prioritaire par rapport à l'exécution de la composante de débit de carburant Wf_MULTI de la commande multivariable C_MULTI. Ce qui signifie aussi que dans cet autre mode de réalisation de la turbomachine T, la composante de débit de carburant Wf_MULTI devient optionnelle.

A titre d'exemple nullement limitatif, il peut être envisagé que la composante de débit de carburant Wf_MULTI est exécutée (i.e. est transmise à la chambre de combustion 13) uniquement si le quatrième module MOD_DET4 rencontre un problème l'empêchant de générer la commande Wf_MONO.

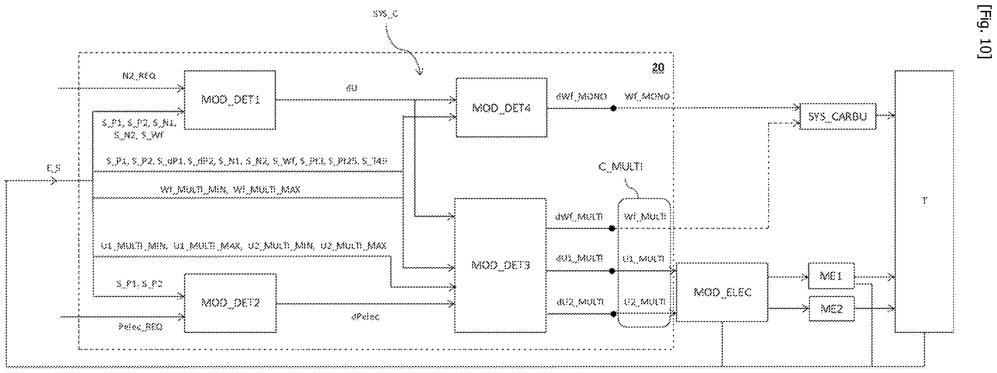

La figure 10 représente schématiquement un autre exemple particulier de fonctionnement de la boucle de contrôle de la turbomachine T, telle que mise en oeuvre au moyen, notamment, du système de contrôle SYS_C de la figure 9.

Tel qu'illustré par la figure 10, l'ensemble des caractéristiques techniques décrites ci-avant en référence à la figure 4 s'appliquent encore ici dans cet autre exemple de fonctionnement de la boucle de contrôle. En particulier, les premier, deuxième et troisième modules de détermination MOD_DET1, MOD_DET2, MOD_DET3 sont par exemple respectivement configurés selon les exemples de réalisation des figures 5, 6 et 7.

Par ailleurs, la boucle de contrôle de la figure 10 diffère de celle de la figure 4 en ce que le système de contrôle SYS_C comporte désormais également ledit quatrième module de détermination MOD_DET4.

Aussi, dans l'exemple de la figure 10, le quatrième module de détermination MOD_DET4 reçoit en entrée, notamment, la variation dU, les signaux S_P1, S_P2, S_dP1, S_dP2, S_N1, S_N2, S_Wf, S_Pt3, S_Pt25 et S_T49, ainsi que les limites Wf_MULTI_MIN, Wf_MULTI_MAX. A partir de ces signaux et limites reçus en entrée, le quatrième module de détermination MOD_DET4 est en mesure de déterminer la commande monovariable Wf_MONO.

La composante Wf_MONO est alors acheminée vers le système de carburant SYS_CARBU de la turbomachine T (en lieu et place de la commande Wf_MULTI qui reste optionnelle comme mentionnée auparavant), de sorte que le débit de carburant injecté dans la chambre de combustion 13 soit conforme à ladite commande Wf_MONO.

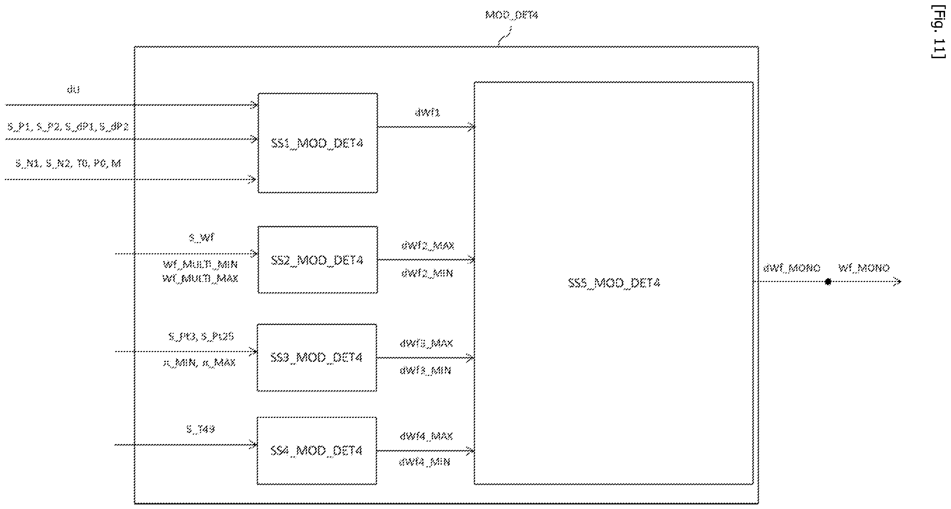

La figure 11 représente schématiquement un exemple particulier de réalisation du quatrième module de détermination MOD_DET4 appartenant au système de contrôle SYS_C utilisé pour le fonctionnement de la boucle de contrôle de la figure 10.

Pour cet exemple de la figure 11, on adopte la notation selon laquelle une variable réduite (ou encore dite « corrigée ») comporte un indice « r » en comparaison avec la variable non réduite dont elle est issue.

Le fait de « corriger » une variable (il peut s'agir d'une variable d'un signal mesuré, comme dans le cas de dP1 et dP2, ou bien d'une variable d'un signal déterminé selon l'invention, comme dans le cas de la variation dU) résulte d'un objectif consistant à pouvoir comparer entre elles des valeurs de ladite variable qui ne sont pas toutes acquises ou déterminées dans des conditions identiques. Dit encore autrement, il s'agit de pouvoir s'affranchir des conditions ambiantes dans lesquelles de telles valeurs sont acquises ou déterminées afin de les rendre comparables entre elles. En tout état de cause, la réduction (correction) de variables est une technique bien connue de l'homme du métier, qui sait en outre aussi comment repasser d'une variable réduite à une variable non réduite.

Dans l'exemple de la figure 11, le quatrième module de détermination MOD_DET4 comporte différents sous-modules, dont un premier sous-module SS1_MOD_DET4 configuré pour recevoir en entrée la variation dU, les signaux S_P1, S_P2, S_dP1, S_dP2, S_N1, S_N2, les valeurs T0, P0 et M et les variations dWf_MAX, dWf_MIN, ainsi que pour déterminer, à partir de ces entrées, une variation dWf1 pour la seule variable de débit de carburant. Pour ledit premier sous-module SS1_MOD_DET4, il s'agit ici de calculer ladite variation dWf1 avec une pré-compensation des variations instantanées des puissances électriques. A cet effet, il est considéré dans cet exemple que la dépendance entre les variations dWf1_r, dU, dP1_r (i.e. variation réduite de la puissance instantanée injectée/prélevée sur l'arbre BP 21) et dP2_r (i.e. variation réduite de la puissance instantanée injectée/prélevée sur l'arbre HP 22) est localement linéaire, ce qui peut encore s'écrire :

$$a\_W \times dWf1\_r + b\_W \times dP1\_r + c\_W \times dP2\_r = dU\_r$$

où a_W, b_W et c_W sont des coefficients donnés.

La détermination de la variation dWf1_r se déduit de l'expression précédente, de sorte à pouvoir finalement obtenir dWf1.

Le quatrième module de détermination MOD_DET4 comporte également :

- un deuxième sous-module SS2_MOD_DET4 similaire au premier sous-module SS1_MOD_DET3 équipant le troisième module de détermination MOD_DET3 et décrit en référence à la figure 7. Les sorties dudit deuxième sous-module SS2_MOD_DET4 correspondent donc à une variation maximale de carburant dWf2_MAX et une variation minimale de carburant dWf2_MIN,

- un troisième sous-module SS3_MOD_DET4 similaire, en termes d'entrées, au troisième sous-module SS3_MOD_DET3 équipant le troisième module de détermination MOD_DET3 et décrit en référence à la figure 7. Les sorties dudit troisième sous-module SS3_MOD_DET4 correspondent ici aussi à une variation maximale de carburant dWf3_MAX et une variation minimale de carburant dWf3_MIN,

- un quatrième sous-module SS4_MOD_DET4 similaire, en terme d'entrées, au quatrième sous-module SS4_MOD_DET3 équipant le troisième module de détermination MOD_DET3 et décrit en référence à la figure 7. Les sorties dudit quatrième sous-module SS4_MOD_DET4 correspondent ici aussi à une variation maximale de carburant dWf4_MAX et une variation minimale de carburant dWf4_MIN.

Par ailleurs, dans l'exemple de la figure 11, le quatrième module de détermination MOD_DET4 comporte également un cinquième sous-module SS5_MOD_DET4 configuré pour recevoir en entrée la variation les variations dWf1, dWf2_MAX, dWf2_MIN, dWf3_MAX, dWf3_MIN, dWf4_MAX, dWf4_MIN, ainsi que pour déterminer, à partir de ces entrées, une variation dWf_MONO pour la seule variable de débit de carburant. Plus particulièrement, la variation dWf_MONO est déterminée en tenant compte de la plus petite des variations parmi dWf2_MIN, dWf3_MIN, dWf4_MIN ainsi que de la plus grande des variations dWf2_MAX, dWf3_MAX, dWf4_MAX.

Comme cela a déjà été expliqué ci-avant, la commande Wf_MONO est déterminée par intégration de la variation dWf_MONO. On note que, dans l'exemple de la figure 11, il est également considéré que :

- la dépendance entre les variations fournies en entrée du troisième sous-module SS3_MOD_DET4 est localement linéaire,
- la dépendance entre les variations fournies en entrée du quatrième sous-module SS4_MOD_DET4 est localement linéaire.

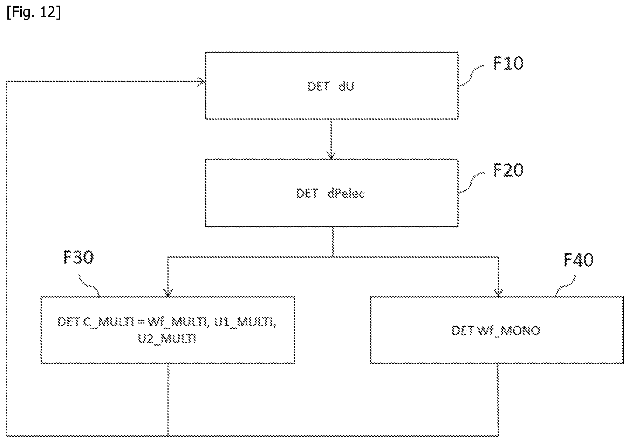

La figure 12 représente, sous forme d'ordinogramme, un mode particulier de mise en oeuvre du procédé de contrôle selon l'invention, par le système de contrôle SYS_C de la figure 9.

La description du mode de mise en oeuvre de la figure 10 est réalisée sous les mêmes hypothèses que celles faites dans le cadre de la description du mode de mise en oeuvre de la figure 8.

Dans le mode de mise en oeuvre illustré par la figure 10, le procédé de contrôle comporte des étapes F10, F20 et F30 respectivement identiques aux étapes E10, E20 et E30 décrites ci-avant en référence au mode de mise en oeuvre de la figure 8.

Le procédé de contrôle comporte également une étape F40 de détermination de la commande monovariable Wf_MONO. Cette étape F40 est mise en oeuvre par le quatrième module de détermination MOD_DET4.

Il est à noter que, dans le mode de mise en oeuvre illustré par la figure 10, l'étape F40 est exécutée en parallèle de l'étape F30. Rien n'exclut cependant d'envisager d'autres modes de mise en oeuvre dans lesquels l'étape F40 est exécutée avant ou bien encore après l'étape F30. En tout état de cause, quel que soit l'ordre dans lequel sont exécutées lesdites étapes F30 et F40, la commande Wf_MONO est prioritaire par rapport à la composante WF_MULTI de la commande C_MULTI, comme cela a déjà été mentionnée auparavant.

Les étapes F10, F20, F30 et F40 sont par la suite itérées de sorte à permettre un contrôle dans le temps de la turbomachine T. La fréquence à laquelle lesdites étapes F10, F20, F30 et F40 sont itérées correspond à la fréquence de calcul du FADEC 20, par exemple 50 Hz.

L'invention a été décrite jusqu'à présent en considérant des modes de mise en oeuvre dans lesquels les différents signaux de l'ensemble E_S sont acquis préalablement à l'exécution du procédé de contrôle. Il ne s'agit néanmoins là que de variantes d'implémentation de l'invention, et rien n'exclut d'envisager des modes , non revendiqués, dans lesquels l'acquisition des signaux de l'ensemble E_S fait partie du procédé de contrôle. On note que dans ce cas, le système de contrôle comporte également un module d'obtention configuré pour obtenir lesdits signaux de l'ensemble E_S.

**Revendications**

1. Procédé de contrôle d'une turbomachine (T) équipée d'un générateur de gaz comprenant des arbres de rotation respectivement basse pression (21) et haute pression (22), la turbomachine comportant au moins une machine électrique (ME1, ME2) formant un dispositif d'injection/prélèvement de puissance sur un desdits arbres de rotation, ledit procédé comportant des étapes incluses dans une boucle de contrôle et comprenant :

- une détermination (E10, F10), pour au moins un arbre et en fonction d'une consigne de régime (N2_REQ) associée audit au moins un arbre, d'une variation dU d'une commande de puissance mécanique,
- une détermination (E20, F20), pour l'ensemble des machines électriques et en fonction d'une consigne d'injection/prélèvement (Pelec_REQ) associée audit ensemble de machines électriques, d'une variation dPelec d'une commande d'injection/prélèvement de puissance,
- une détermination (E30, F30) d'une commande multivariable (C_MULTI) comportant une composante de débit de carburant (Wf_MULTI) ainsi qu'une composante d'injection/prélèvement de puissance (U1, U2) pour chaque machine électrique, ladite commande multivariable étant déterminée de sorte à :

- optimiser une contrainte de suivi desdites variations dU et dPelec,
- respecter des limites de fonctionnement de la turbomachine.

2. Procédé selon la revendication 1, dans lequel les étapes incluses dans la boucle de contrôle comportent en outre une étape de détermination (F40) d'une commande monovariable de débit de carburant (Wf_MONO) en fonction de ladite variation dU, de limites de fonctionnement de la turbomachine ainsi que de valeurs courantes d'injection/prélèvement pour ledit ensemble de machines électriques, l'unique commande de débit de carburant destinée à être exécutée pour le contrôle de la turbomachine (T), parmi ladite commande monovariable et la composante de débit de carburant (Wf_MULTI) de la commande multivariable (C_MULTI), étant ladite commande monovariable.

3. Procédé selon l'une quelconque des revendications 1 à 2, dans lequel les limites de fonctionnement comportent :

- une limite inférieure (n_MIN) et une limite supérieure (n_MAX) d'un rapport entre les pressions en sortie et en entrée d'un compresseur haute pression (12) appartenant au générateur de gaz, de sorte à assurer une protection contre les phénomènes de pompage et d'extinction de flamme, et/ou
- pour au moins une turbine (14, 15) appartenant au générateur de gaz parmi une turbine basse pression (15) et une turbine haute pression (14), une limite supérieure (t_MAX) de température de ladite turbine.

4. Procédé selon l'une quelconque des revendications 1 à 3, dans lequel la turbomachine (T) comporte une première machine électrique (ME1) formant un dispositif d'injection/prélèvement de puissance sur l'arbre de rotation basse pression (21) et une deuxième machine électrique (ME2) formant un dispositif d'injection/prélèvement de puissance sur l'arbre de rotation haute pression (22).

5. Procédé selon la revendication 4, dans lequel la contrainte de suivi des variations dU et dPelec s'écrit :

$$\begin{bmatrix} a & b & c \\ 0 & d & e \end{bmatrix} \begin{bmatrix} dWf\_MULTI \\ dU1\_MULTI \\ dU2\_MULTI \end{bmatrix} = \begin{bmatrix} dU \\ dPelec \end{bmatrix} + \begin{bmatrix} v1 \\ v2 \end{bmatrix}$$

où :

- a, b, c, d et e sont des coefficients donnés,
- dWf_MULTI, dU1_MULTI et dU2_MULTI correspondent respectivement à des variations bornées de la composante de débit de carburant (Wf_MULTI), de la composante d'injection/prélèvement de puissance (U1) pour la première machine électrique (ME1) et de la composante d'injection/prélèvement de puissance (U2) pour la deuxième machine électrique (ME2),
- la matrice V dont les composantes v1 et v2 sont données correspond à un paramètre de régularisation permettant de relâcher la contrainte de suivi des variations dU et dPelec,

et dans lequel l'optimisation de la contrainte de suivi consiste à minimiser une fonction de coût J ayant pour expression :

$$J = \begin{bmatrix} dWf\_MULTI \\ dU1\_MULTI \\ dU2\_MULTI \end{bmatrix}^T \times Q1 \times \begin{bmatrix} dWf\_MULTI \\ dU1\_MULTI \\ dU2\_MULTI \end{bmatrix} + \begin{bmatrix} v1 \\ v2 \end{bmatrix}^T \times Q2 \times \begin{bmatrix} v1 \\ v2 \end{bmatrix}$$

où Q1 et Q2 sont des matrices de poids données.

6. Procédé selon l'une quelconque des revendications 1 à 5, dans lequel ledit au moins un arbre considéré lors de la détermination de la variation dU est l'arbre de rotation basse pression (21) si la boucle de contrôle est mise en oeuvre pendant une phase de fonctionnement stabilisée de la turbomachine (T), et l'arbre de rotation haute pression (22) si boucle de contrôle est mise en oeuvre pendant une phase de fonctionnement transitoire de la turbomachine.

7. Programme d'ordinateur comportant des instructions pour la mise en oeuvre d'un procédé de contrôle selon l'une quelconque des revendications 1 à 6 lorsque ledit programme d'ordinateur est exécuté par un ordinateur.

8. Support d'enregistrement lisible par un ordinateur sur lequel est enregistré un programme d'ordinateur selon la revendication 7.

9. Système de de contrôle (SYS_C) d'une turbomachine (T) équipée d'un générateur de gaz comprenant des arbres de rotation respectivement basse pression (21) et haute pression (22), la turbomachine comportant au moins une machine électrique (ME1, ME2) formant un dispositif d'injection/prélèvement de puissance sur un desdits arbres de rotation, ledit système de contrôle comportant :

   - un premier module de détermination (MOD_DET1) configuré pour déterminer, pour au moins un arbre et en fonction d'une consigne de régime (N2_REQ) associée audit au moins un arbre, une variation dU d'une commande de puissance mécanique,
   - un deuxième module de détermination (MOD_DET2) configuré pour déterminer, pour l'ensemble des machines électriques et en fonction d'une consigne d'injection/prélèvement (Pelec_REQ) associée audit ensemble de machines électriques, une variation dPelec d'une commande d'injection/prélèvement de puissance,
   - un troisième module de détermination (MOD_DET3) configuré pour déterminer une commande multivariable (C_MULTI) comportant une composante de débit de carburant (Wf_MULTI) ainsi qu'une composante d'injection/prélèvement de puissance (U1, U2) pour chaque machine électrique, ladite commande multivariable étant déterminée de sorte à :

   • optimiser une contrainte de suivi des variations dU et dPelec,
   • respecter des limites de fonctionnement de la turbomachine.

10. Système (SYS_C) selon la revendication 9, ledit système comportant en outre un quatrième module de détermination (MOD_DET4) configuré pour déterminer une commande monovariable (Wf_MONO) de débit de carburant en fonction de ladite variation dU, de limites de fonctionnement de la turbomachine ainsi que de valeurs courantes d'injection/prélèvement pour ledit ensemble de machines électriques, l'unique commande de débit de carburant destinée à être exécutée pour le contrôle de la turbomachine (T), parmi ladite commande monovariable et la composante de débit de carburant (Wf_MULTI) de la commande multivariable (C_MULTI), étant ladite commande monovariable.

11. Turbomachine (T) équipée d'un générateur de gaz comportant des arbres de rotation respectivement basse pression (21) et haute pression (22), la turbomachine comprenant au moins une machine électrique (ME1, ME2) formant un dispositif d'injection/prélèvement de puissance sur au moins un desdits arbres de rotation ainsi qu'un système de contrôle (SYS_C) selon l'une quelconque des revendications 9 et 10.

12. Aéronef comportant une turbomachine selon la revendication 11.

**Patentansprüche**

1. Verfahren zum Steuern einer Turbomaschine (T), die mit einem Gasgenerator ausgestattet ist, der jeweils eine Drehwelle für Niederdruck (21) und eine für Hochdruck (22) umfasst, die Turbomaschine umfassend mindestens eine elektrische Maschine (ME1, ME2), die eine Leistungseinspeisungs-/-entnahmevorrichtung auf einer der Drehwellen bildet, das Verfahren umfassend Schritte, die in einer Steuerungsschleife beinhaltet sind, und umfassend:

   - eine Bestimmung (E10, F10), für mindestens eine Welle und abhängig von einem Drehzahlvorgabewert (N2_REQ), der mit der mindestens einen Welle assoziiert ist, einer Variation dU einer mechanischen Leistungsregelung,
   - eine Bestimmung (E20, F20), für die Gesamtheit der elektrischen Maschinen und abhängig von einem Einspeisungs-/Entnahme-Vorgabewert (Pelec_REQ), der mit der Gesamtheit der elektrischen Maschinen assoziiert ist, einer Variation dPelec einer Leistungseinspeisungs-/-entnahme-Regelung,
   - eine Bestimmung (E30, F30) einer multivariaten Regelung (C_MULTI), umfassend eine Kraftstoffdurchflussmengen-Komponente (Wf_MULTI) sowie eine Leistungseinspeisungs-/-entnahmekomponente (U1, U2) für jede elektrische Maschine, wobei die multivariate Regelung zu Folgendem bestimmt wird:

   • Optimieren eines Vorgabewerts zur Verfolgung der Variationen dU und dPelec,
   • Einhalten von Betriebsgrenzen der Turbomaschine.

**2.** Verfahren nach Anspruch 1, wobei die Schritte, die in der Steuerungsschleife beinhaltet sind, ferner umfassend einen Bestimmungsschritts (F40) einer monovariablen Kraftstoffdurchflussmengen-Regelung (Wf_MONO) abhängig von der Variation dU, von Betriebsgrenzen der Turbomaschine sowie von aktuellen Einspeise-/Entnahmewerten für den Satz elektrischer Maschinen, wobei die einzige Kraftstoffdurchflussmengen-Regelung, die zum Ausführen der Steuerung der Turbomaschine (T) bestimmt ist, von der monovariablen Regelung und der Kraftstoffdurchflussmengen-Komponente (Wf_MULTI) der multivariablen Regelung (C_MULTI) die monovariable Regelung ist.

**3.** Verfahren nach einem der Ansprüche 1 bis 2, wobei die Betriebsgrenzen Folgendes umfassen:

- eine Untergrenze (n_MIN) und eine Obergrenze (n_MAX) eines Verhältnisses zwischen den Druckwerten an dem Ausgang und an dem Eingang eines Hochdruckkompressors (12), der zu dem Gasgenerator gehört, um einen Schutz gegen Pump- und Flammenlöschphänomene zu gewährleisten, und/oder
- für mindestens eine Turbine (14, 15), die zu dem Gasgenerator unter einer Niederdruckturbine (15) und einer Hochdruckturbine (14) gehört, eine Obergrenze (t_MAX) der Temperatur der Turbine.

**4.** Verfahren nach einem der Ansprüche 1 bis 3, wobei die Turbomaschine (T) eine erste elektrische Maschine (ME1), die eine Leistungseinspeisungs-/-entnahmevorrichtung auf der Niederdruckdrehwelle (21) bildet, und eine zweite elektrische Maschine (ME2), die eine Leistungseinspeisungs-/-entnahmevorrichtung auf der Hochdruckdrehwelle (22) bildet, umfasst.

**5.** Verfahren nach Anspruch 4, wobei der Vorgabewert zur Verfolgung der Variationen dU und dPelec wie folgt geschrieben wird:

$$\begin{bmatrix} a & b & c \\ 0 & d & e \end{bmatrix} \begin{bmatrix} dWf\_MULTI \\ dU1\_MULTI \\ dU2\_MULTI \end{bmatrix} = \begin{bmatrix} dU \\ dPelec \end{bmatrix} + \begin{bmatrix} v1 \\ v2 \end{bmatrix}$$

wobei

- a, b, c, d und e gegebene Koeffizienten sind,
- dWf_MULTI, dUl_MULTI und dU2_MULTI jeweils beschränkten Variationen der Kraftstoffdurchflussmengen-Komponente (Wf_MULTI) der Leistungseinspeisungs-/-entnahmekomponente (U1) für die erste elektrische Maschine (ME1) und die Leistungseinspeisungs-/-entnahmekomponente (U2) für die zweite elektrische Maschine (ME2) entsprechen,
- die Matrix V, deren Komponenten v1 und v2 gegeben sind, einem Regularisierungsparameter entspricht, der es ermöglicht, den Vorgabewert zur Verfolgung der Variationen dU und dPelec zu lockern,
und wobei die Optimierung des Vorgabewerts zur Verfolgung darin besteht, eine Kostenfunktion J zu minimieren, die wie folgt ausgedrückt wird:

$$J = \begin{bmatrix} dWf\_MULTI \\ dU1\_MULTI \\ dU2\_MULTI \end{bmatrix}^T \times Q1 \times \begin{bmatrix} dWf\_MULTI \\ dU1\_MULTI \\ dU2\_MULTI \end{bmatrix} + \begin{bmatrix} v1 \\ v2 \end{bmatrix}^T \times Q2 \times \begin{bmatrix} v1 \\ v2 \end{bmatrix}$$

wobei Q1 und Q2 Matrizen mit gegebenen Gewichtungen sind.

**6.** Verfahren nach einem der Ansprüche 1 bis 5, wobei die mindestens eine Welle, die bei der Bestimmung der Änderung dU berücksichtigt wird, die Niederdruckdrehwelle (21) ist, wenn die Steuerungsschleife während einer stabilisierten Betriebsphase der Turbomaschine (T) implementiert wird, und die Hochdruckdrehwelle (22) ist, wenn die Steuerungsschleife während einer transitorischen Betriebsphase der Turbomaschine implementiert wird.

**7.** Computerprogramm, umfassend Anweisungen zum Implementieren eines Prüfverfahrens nach einem der Ansprüche 1 bis 6, wenn das Computerprogramm von einem Computer ausgeführt wird.

**8.** Computerlesbares Speichermedium, auf dem ein Computerprogramm nach Anspruch 7 gespeichert ist.

**9.** Steuerungssystem (SYS_C) einer Turbomaschine (T), die mit einem Gasgenerator ausgestattet ist, der jeweils eine Drehwelle für Niederdruck (21) und eine für Hochdruck (22) umfasst, die Turbomaschine umfassend mindestens eine elektrische Maschine (ME1, ME2), die eine Leistungseinspeisungs-/-entnahmevorrichtung auf einer der Drehwellen bildet, das System umfassend:

- ein erstes Bestimmungsmodul (MOD_DETI), das konfiguriert ist, um für mindestens eine Welle und abhängig von einem Drehzahlvorgabewert (N2_REQ), der mit der mindestens einen Welle assoziiert ist, eine Variation dU einer mechanischen Leistungsregelung zu bestimmen,
- ein zweites Bestimmungsmodul (MOD_DET2), das konfiguriert ist, um für die Gesamtheit der elektrischen Maschinen und abhängig von einem Einspeisungs-/Entnahme-Vorgabewert (Pelec_REQ), der mit der Gesamtheit der elektrischen Maschinen assoziiert ist, eine Variation dPelec einer Leistungseinspeisungs-/-entnahme-Regelung zu bestimmen,
- ein drittes Bestimmungsmodul (MOD_DET3), das konfiguriert ist, um eine multivariate Regelung (C_MULTI) zu bestimmen, umfassend eine Kraftstoffdurchflussmengen-Komponente (Wf_MULTI) sowie eine Leistungseinspeisungs-/-entnahmekomponente (U1, U2) für jede elektrische Maschine, wobei die multivariate Regelung zu Folgendem bestimmt wird:

• Optimieren eines Vorgabewerts zur Verfolgung der Variationen dU und dPelec,
• Einhalten von Betriebsgrenzen der Turbomaschine.

10. System (SYS_C) nach Anspruch 9, wobei das System ferner ein viertes Bestimmungsmodul (MOD_DET4) umfasst, das konfiguriert ist, um eine monovariable Regelung (Wf_MONO) für Kraftstoffflussmenge abhängig von der Variation dU, Betriebsgrenzen der Turbomaschine sowie aktuelle Einspeisungs-/Entnahmewerte für den Satz von elektrischen Maschinen zu bestimmen, wobei die einzige Kraftstoffdurchflussmengen-Regelung, die zum Ausführen der Steuerung der Turbomaschine (T) bestimmt ist, von der monovariablen Regelung und der Kraftstoffdurchflussmengen-Komponente (Wf_MULTI) der multivariablen Regelung (C_MULTI) die monovariable Regelung ist.

11. Turbomaschine (T), die mit einem Gasgenerator ausgestattet ist, der eine Drehwelle für Niederdruck (21) und eine für Hochdruck (22) umfasst, die Turbomaschine umfassend mindestens eine elektrische Maschine (ME1, ME2), die eine Leistungseinspeisungs-/-entnahmevorrichtung auf mindestens eine der Drehwellen bildet, sowie ein Steuersystem (SYS_C) nach einem der Ansprüche 9 und 10.

12. Luftfahrzeug, umfassend eine Turbomaschine nach Anspruch 11.

**Claims**

1. A method for controlling a turbomachine (T) equipped with a gas generator comprising, respectively, low-pressure (21) and high-pressure (22), rotation shafts, the turbomachine including at least one electric machine (ME1, ME2) forming a device for injecting/taking-off power onto/from one of said rotation shafts, said method including steps included in a control loop and comprising:

- the determining (E10, F10), for at least one shaft and as a function of a rating setpoint (N2_REQ) associated with said at least one shaft, of a variation dU of a mechanical power command,
- the determining (E20, F20), for the set of electric machines and as a function of an injection/take-off setpoint (Pelec_REQ) associated with said set of electric machines, of a variation dPelec of a power injection/take-off command,
- the determining (E30, F30) of a multivariable command (C_MULTI) including a fuel flow rate component (Wf_MULTI) as well as a power injection/take-off component (U1, U2) for each electric machine, said multivariable command being determined such as to:

• optimize a constraint of tracking of said variations dU and dPelec,
• observe operating limits of the turbomachine.

2. The method as claimed in claim 1, wherein the steps included in the control loop further include a step (F40) of determining a single-variable fuel flow rate command (Wf_MONO) as a function of said variation dU, operating limits of the turbomachine and current injection/take-off values for said set of electric machines, the single fuel flow rate command intended to be executed for the control of the turbomachine (T), from among said single-variable command and the fuel flow rate component (Wf_MULTI) of the multivariable command (C_MULTI), being said single-variable command.

3. The method as claimed in any of claims 1 to 2, wherein the operating limits include:

   - a lower limit (n_MIN) and an upper limit (n_MAX) of a ratio of the pressures at the outlet and at the inlet of a high-pressure compressor (12) belonging to the gas generator, such as to provide protection from surge and flameout phenomena, and/or
   - for at least one turbine (14, 15) belonging to the gas generator from among a low-pressure turbine (15) and a high-pressure turbine (14), an upper temperature limit (t_MAX) of said turbine.

4. The method as claimed in any of claims 1 to 3, wherein the turbomachine (T) includes a first electric machine (ME1) forming a device for injecting/taking-off power onto/from the low-pressure rotation shaft (21) and a second electric machine (ME2) forming a device for injecting/taking-off power onto/from the high-pressure rotation shaft (22).

5. The method as claimed in claim 4, wherein the constraint of tracking of the variations dU and dPelec is written:

$$\begin{bmatrix} a & b & c \\ 0 & d & e \end{bmatrix} \begin{bmatrix} dWf\_MULTI \\ dU1\_MULTI \\ dU2\_MULTI \end{bmatrix} = \begin{bmatrix} dU \\ dPelec \end{bmatrix} + \begin{bmatrix} v1 \\ v2 \end{bmatrix}$$

where:

   - a, b, c, d and e are given coefficients,
   - dWf_MULTI, dU1_MULTI and dU2_MULTI respectively correspond to bounded variations of the fuel flow rate component (Wf_MULTI), of the power injection/take-off component (U1) for the first electric machine (ME1) and of the power injection/take-off component (U2) for the second electric machine (ME2),
   - the matrix V, of which the components v1 and v2 are given, corresponds to a regularization parameter used to relax the constraint of tracking of the variations dU and dPelec,
   and in which the optimization of the tracking constraint consists in minimizing a cost function J having the expression:

$$J = \begin{bmatrix} dWf\_MULTI \\ dU1\_MULTI \\ dU2\_MULTI \end{bmatrix}^T \times Q1 \times \begin{bmatrix} dWf\_MULTI \\ dU1\_MULTI \\ dU2\_MULTI \end{bmatrix} + \begin{bmatrix} v1 \\ v2 \end{bmatrix}^T \times Q2 \times \begin{bmatrix} v1 \\ v2 \end{bmatrix}$$

   where Q1 and Q2 are given weight matrices.

6. The method as claimed in any of claims 1 to 5, wherein said at least one shaft considered when determining the variation dU is the low-pressure rotation shaft (21) if the control loop is implemented during a steady-state operation phase of the turbomachine (T), and the high-pressure rotation shaft (22) if the control loop is implemented during a transient operating phase of the turbomachine.

7. A computer program including instructions for implementing a control method as claimed in any of claims 1 to 6, wherein said computer program is executed by a computer.

8. A storage medium readable by a computer and on which is recorded a computer program as claimed in claim 7.

9. A system (SYS_C) for controlling a turbomachine (T) equipped with a gas generator comprising, respectively, low-pressure (21) and high-pressure (22) rotation shafts, the turbomachine including at least one electric machine (ME1, ME2) forming a device for injecting/taking-off power onto/from one of said rotation shafts, said control system including:

   - a first determining module (MOD_DET1) configured to determine, for at least one shaft and as a function of a rating setpoint (N2_REQ) associated with said at least one shaft, a variation dU of a mechanical power command,
   - a second determining module (MOD_DET2) configured to determine, for the set of electric machines and as a function of an injection/take-off setpoint (Pelec_REQ) associated with said set of electric machines, a variation dPelec of a power injection/take-off command,
- a third determining module (MOD_DET3) configured to determine a multivariable command (C_MULTI) including a fuel flow rate component (Wf_MULTI) as well as a power injection/take-off component (U1, U2) for each electric machine M1, M2, said multivariable command being determined such as to:

• optimize a constraint of tracking of the variations dU and dPelec,
• observe operating limits of the turbomachine.

10. The system (SYS_C) as claimed in claim 9, said system further including a fourth determining module (MOD_DET4) configured to determine a single-variable fuel flow rate command (Wf_MONO) as a function of said variation dU, operating limits of the turbomachine as well as injection/take-off values for said set of electric machines, the single fuel flow rate command intended to be executed for the control of the turbomachine (T), from among said single-variable command and the fuel flow rate component (Wf_MULTI) of the multivariable command (C_MULTI), being said single-variable command.

11. A turbomachine (T) equipped with a gas generator including, respectively, low-pressure (21) and high-pressure (22) rotation shafts, the turbomachine comprising at least one electric machine (ME1, ME2) forming a device for injecting/taking-off power onto/from at least one of said rotation shafts as well as a control system (SYS_C) as claimed in any of claims 9 and 10.

12. An aircraft including a turbomachine as claimed in claim 11.

[Fig. 1]

[Fig. 2]

[Fig. 3]

[Fig. 4]

[Fig. 5]

[Fig. 6]

[Fig. 7]

[Fig. 8]

[Fig. 9]

EP 4 334 582 B1

[Fig. 10]

29

[Fig. 11]

[Fig. 12]

**RÉFÉRENCES CITÉES DANS LA DESCRIPTION**

**Documents brevets cités dans la description**

- WO 2016020618 A

- FR 3087491 A1